# EUROPEAN PATENT SPECIFICATION

(11) **EP 4 312 452 B1**
(45) Date of publication and mention of the grant of the patent: **30.07.2025**
(21) Application number: 22187916.6
(22) Date of filing: 29.07.2022
(51) Int. Cl.: H04W 36/30, H04W 36/36, H04W 36/00, H04W 76/19

(54) **HANDLING CONDITIONAL HANDOVER PREPARATIONS IN FAILURE SCENARIOS**
BEHANDLUNG VON BEDINGTEN HANDOVER-PRÄPARATIONEN IN FEHLERSZENARIEN
GESTION DE PRÉPARATIONS DE TRANSFERT CONDITIONNEL DANS DES SCÉNARIOS DE DÉFAILLANCE

(43) Date of publication of application: 31.01.2024
(73) Proprietor: Nokia Technologies Oy, 02610 Espoo (FI)
(72) Inventor: Karabulut, Umur, 81379 Munich (DE); Gürsu, Halit Murat, 81379 Munich (DE); Awada, Ahmad, 81249 Munich (DE); Stanczak, Jedrzej, 50216 Wroclaw (PL); Spapis, Panagiotis, 81475 Munich (DE); Subhyal, Bin Iqbal, 81541 Munich (DE)
(74) Representative: Cohausz & Florack

(56) References cited:
- WO-A1-2020/117118
- WO-A1-2021/090626
- WO-A1-2021/194134
- SUBHYAL BIN IQBAL ET AL: "On the Modeling and Analysis of Fast Conditional Handover for 5G-Advanced", ARXIV.ORG, CORNELL UNIVERSITY LIBRARY, 201 OLIN LIBRARY CORNELL UNIVERSITY ITHACA, NY 14853, 14 April 2022 (2022-04-14), XP091204246

## Description

### TECHNOLOGICAL FIELD

Various example embodiments relate to wireless communication networks, in particular to conditional handovers in such networks.

### BACKGROUND

Mobility of wireless terminals (or user equipment, UE) is desirable in various wireless communication networks. Handovers may be used in order to provide enhanced connectivity to UEs moving within a wireless communication network. Examples of wireless communication networks comprise cellular networks such as networks operating according to Long Term Evolution (LTE) or 5G radio access technology. 5G radio access technology may also be referred to as New Radio (NR) access technology. The 3^{rd} Generation Partnership Project, 3GPP, develops standards for LTE as well as 5G/NR. One of the topics discussed within 3GPP is how to improve various techniques related to handovers.

Any of the documents WO 2021/194134 A1, WO 2020/117118 A1 and WO 2021/090626 A1 discloses a UE which performs a re-establishment procedure with a target cell upon detection of RLF with a source cell.

### SUMMARY OF SOME EXEMPLARY EMBODIMENTS

The present invention is defined by the appended claims.

Conditional handovers (CHOs) have been introduced in 3GPP Rel. 16 to improve mobility robustness, i.e. to improve connectivity of UEs moving within a geographical area served by a wireless communication network. A wireless communication network may comprise a number of cells each of which may cover at least a part of the geographical area served by the wireless communication network. Thereby, each cell may be served by at least one base station (e.g. a gNB or eNB) of the wireless communication network. Now, in case of CHO, a wireless communication network may prepare multiple target cells located within a service area of the wireless communication network for a handover of the UE from a source cell serving the UE (also referred to as the serving cell of the UE) to one of the target cells. To this end, the wireless communication network may provide CHO information such as, e.g., CHO configurations and CHO conditions to the UE and may reserve resources at the target cells for the UE. Each CHO configuration may be associated with a corresponding CHO condition to be evaluated by the UE. When a CHO condition is met, a corresponding CHO configuration may be selected and a handover (HO) from the serving cell to the target cell may be performed.

In this way, enhanced connectivity of UEs moving within the geographical area served by the wireless communication network, i.e. an improved mobility robustness, may be achieved. In particular, by providing a CHO command (or CHO preparation) to a UE relatively early, i.e. before the radio quality deteriorates, transmission failures of measurement reports triggering a HO preparation and/or failures to receive a HO command may be avoided.

However, in scenarios with highly frequent HOs, e.g. when the UE stays in one serving cell only relatively short, it may happen that a target cell cannot receive a measurement report triggering the CHO preparation or cannot provide the CHO command timely to the UE. This may in turn lead to radio link failure (RLF) and/or handover failure (HOF). In order to reduce the likelihood for such RLFs and/or HOFs in scenarios with highly frequent handovers, a single CHO command may be used for more than one CHO such as to allow for at least two consecutive CHOs based on a single CHO command. In other words, by using a single CHO command allowing for at least two consecutive CHOs, a UE to which the CHO command is provided may execute two or more CHOs consecutively without having to wait for further CHO configuration(s) to be provided by the wireless communication network after each handover. Herein, CHO preparations may in particular be carried out with neighbor cells for fast CHO (FCHO) execution, wherein the UE may evaluate a corresponding (sub-)set of CHO conditions after each cell change, i.e. after each HO.

In this way, fast cell switching (FCS) between cells having been prepared for FCHO may be enabled for a UE. This approach is also referred to as consecutive CHO.

However, in case of failure, e.g. RLF due to late CHO execution to a target cell or HOF due to too early CHO execution towards a target cell, the UE releases all CHO configurations and initiates a re-establishment procedure to connect to a cell of the wireless communication network which may either be a cell prepared for FCHO or a non-prepared cell. After completing the re-establishment procedure, all FCHO preparations must be repeated, which costs additional delay and signaling overhead for the FCHO preparation procedure. In addition, after having completed the re-establishment procedure, the UE will be prone to failure since repeating the (fast) CHO preparations after a failure might in turn lead to late reception of CHO configurations by the UE, in particular in FCS scenarios.

In view of the above, certain embodiments of the disclosure may have the effect of providing an improved handling of CHO preparations in failure scenarios. More specifically, certain embodiments may have the effect to avoid repeating FCHO preparations after a failure, thereby avoiding additional delay and signaling overhead due to repeating the FCHO preparations. Further, certain embodiments may have the effect of updating FCHO preparations after a failure in an efficient manner, in particular with minimum signaling overhead. Further, certain embodiments may have the effect of providing (fast) CHO configurations to a UE in a faster manner after a failure which in turn enables the UE to perform CHOs in a timely manner, thereby preventing the UE from experiencing (further) failures after completing a re-establishment procedure.

According to a first exemplary aspect, there is disclosed a user equipment. The user equipment may comprise at least one processor. The user equipment may further comprise at least one memory storing instructions. The instructions, when executed by the at least one processor, may cause the user equipment to perform receiving conditional handover information from a first network node. The instructions, when executed by the at least one processor, may further cause the user equipment to perform retaining at least a part of the conditional handover information during a re-establishment procedure following a failure affecting a radio link of the user equipment.

According to a second exemplary aspect, there is disclosed a first network node. The first network node may comprise at least one processor. The first network node may further comprise at least one memory storing instructions. The instructions, when executed by the at least one processor, may cause the first network node to perform transmitting conditional handover information to a user equipment. The instructions, when executed by the at least one processor, may further cause the first network node to perform indicating, to the user equipment, to retain at least a part of the conditional handover information during a re-establishment procedure following a failure affecting a radio link of the user equipment.

According to a third exemplary aspect, there is disclosed a second network node. The second network node may comprise at least one processor. The second network node may further comprise at least one memory storing instructions. The instructions, when executed by the at least one processor, may cause the second network node to perform receiving, from a user equipment, a request for performing a re-establishment procedure, wherein the request includes an indication for identifying a first network node being associated with the user equipment. The instructions, when executed by the at least one processor, may further cause the second network node to perform requesting, from the first network node, context information for the user equipment. The instructions, when executed by the at least one processor, may further cause the second network node to perform receiving, from the first network node, context information for the user equipment, wherein the context information includes conditional handover information associated with the user equipment. The instructions, when executed by the at least one processor, may further cause the second network node to perform indicating, to the first network node, to retain at least a part of the conditional handover information and/or at least a part of conditional handover resources having been reserved for the user equipment.

According to each of the exemplary aspects, a respective method is also disclosed.

Thus, according to the first exemplary aspect, there is disclosed a method performed by a user equipment. The method may comprise receiving conditional handover information from a first network node. The method may further comprise retaining at least a part of the conditional handover information during a re-establishment procedure following a failure affecting a radio link of the user equipment.

According to the second exemplary aspect, there is disclosed a method performed by a first network node. The method may comprise transmitting conditional handover information to a user equipment. The method may further comprise indicating, to the user equipment, to retain at least a part of the conditional handover information during a re-establishment procedure following a failure affecting a radio link of the user equipment.

According to the third exemplary aspect, there is disclosed a method performed by a second network node. The method may comprise receiving, from a user equipment, a request for performing a re-establishment procedure, wherein the request includes an indication for identifying a first network node being associated with the user equipment. The method may further comprise requesting, from the first network node, context information for the user equipment. The method may further comprise receiving, from the first network node, context information for the user equipment, wherein the context information includes conditional handover information associated with the user equipment. The method may further comprise indicating, to the first network node, to retain at least a part of the conditional handover information and/or at least a part of conditional handover resources having been reserved for the user equipment.

Any of the disclosed devices (user equipment, network node) may be a stationary device or a mobile device. The user equipment may in particular be a terminal device, e.g. a mobile device such as a smartphone, a tablet, a wearable, a smartwatch, a low power device, an IoT device, an IIoT device, a vehicle, a truck, a drone, an airplane, or the like. The user equipment may in particular be capable of communicating with (transmitting and/or receiving signals and/or data to/from) one or more other user equipments and/or with one or more network nodes, such as a base station of a wireless communication network. Generally, the user equipment may be any device enabled for communication with a wireless communication network and/or with another user equipment.

A network node (e.g. the first or the second network node) may be understood as a wireless communication station installed at a fixed or mobile location and may in particular be or comprise an entity of a radio access network of a wireless communication system. For instance, the network node may be, comprise, or be part of a base station of a wireless communication network of any generation (e.g. a gNB, eNodeB, NodeB, BTS or the like) of a 3GPP standard. Generally, the network node may be or comprise a hardware or software component implementing a certain functionality. For instance, in an example, the network node may be a location management function, LMF. In an example, the network node may be an entity as defined by 3GPP 5G or NR standard (also referred to as gNB). Accordingly, while the network node may be understood to be implemented in or be a single device or module, the network node may also be implemented across or comprise multiple devices or modules. As such, the network node may in particular be implemented in or be a stationary device. Multiple network nodes of the exemplary aspects may in particular establish a wireless communication system or network, which may in particular be an NR or 5G system (5GS) or any other wireless communications system defined by a past or future standard, in particular successors of the present 3GPP standards. The network nodes of the exemplary aspects may be capable of being in direct and/or indirect communication with the user equipment of the exemplary aspects.

The means or functionality of any of the disclosed devices or apparatuses (i.e. of any of the user equipment and the first and second network nodes) can be implemented in hardware and/or software. They may comprise one or multiple modules or units providing the respective functionality. They may for instance comprise at least one processor for executing computer program code for performing the required functions, at least one memory storing the program code, or both. They could comprise for instance circuitry that is designed to implement the required functions, for instance implemented in a chipset or a chip, like an integrated circuit. In general, the means may comprise for instance one or more processing means or processors.

Specific means may be used to implement specific functions/functionalities/features, e.g. receiving means for receiving conditional handover information from a first network node; and/or retaining means for retaining at least a part of the conditional handover information during a re-establishment procedure following a failure affecting a radio link of the user equipment (said means may for example be comprised by the user equipment). Further examples of specific means may comprise, e.g., transmitting means for transmitting conditional handover information to a user equipment; and/or indicating means for indicating, to the user equipment, to retain at least a part of the conditional handover information during a re-establishment procedure following a failure affecting a radio link of the user equipment (said means may for example be comprised by the first network node). Further examples of specific means may comprise, e.g., receiving means for receiving, from a user equipment, a request for performing a re-establishment procedure, wherein the request includes an indication for identifying a first network node being associated with the user equipment; requesting means for requesting, from the first network node, context information for the user equipment; receiving means for receiving, from the first network node, context information for the user equipment, wherein the context information includes conditional handover information associated with the user equipment; and/or indicating means for indicating, to the first network node, to retain at least a part of the conditional handover information and/or at least a part of conditional handover resources having been reserved for the user equipment (said means may for example be comprised by the second network node).

Thus, according to the respective exemplary aspects of the present disclosure, there is in each case also disclosed a respective apparatus (i.e. a user equipment, a first network node, a second network node) comprising means for performing a method according to the respective aspect of the present disclosure.

Any of the above-disclosed exemplary aspects may, however, in general be performed by an apparatus, which may be a module or a component for a device, for example a chip. The disclosed apparatus may comprise the disclosed components, for instance means, processor, memory, or may further comprise one or more additional components.

According to the exemplary aspects of the present disclosure, there is in each case also disclosed a computer program comprising instructions, which, when executed by an apparatus, cause the apparatus to perform the method of the respective aspect.

The computer program may in each case be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

Thus, according to the exemplary aspects of the present disclosure, there is in each case also disclosed a computer-readable storage medium having stored thereon the computer program of the respective aspect.

The user equipment may be connected or connectable to one or more of the network nodes, in particular by means of a wireless communication link (also referred to as an air interface) such as, e.g., the 5G/NR Uu interface. Being connected or connectable to a network node may for example mean that the user equipment is capable of transmitting/receiving information and/or signals to/from the network node. Similarly, the network node(s) may be capable of transmitting/receiving information and/or signals to/from the user equipment. Each network node may be connected or connectable to at least one other network node, in particular by means of a wireless communication link (or air interface) such as, e.g., the 5G/NR Xn interface. Each network node may be capable of transmitting/receiving information and/or signals to/from at least one other network node.

As used herein, a cell may for example cover at least a part of a geographical area served by a wireless communication network, in particular such that radio service is provided for the at least a part of the geographical area. A cell may for example be associated with (e.g. served by) at least one network node. Serving a cell may for example be understood as providing radio service within the cell. Thus, a network node serving a cell may for example provide radio service within the cell. In an example, a network node may be associated with (e.g. serve) at least one cell.

As used herein, a handover between a cell A and a cell B may refer to a handover between cell A and cell B. Alternatively or in addition, a handover between a cell A and a cell B may refer to a handover between two network nodes (e.g. gNBs) respectively associated with cells A and B, in particular wherein the network nodes respectively serve cells A and B. In other words, a handover between a cell A and a cell B may, alternatively or in addition, refer to a handover between a network node A and a network node B, in particular wherein network node A is associated with (e.g. serves) cell A and/or wherein network node B is associated with (e.g. serves) cell B. Similarly, a handover between a network node A and a network node B may refer to a handover between network node A and network node B. Alternatively or in addition, however, a handover between a network node A and a network node B may refer to a handover between a cell A and a cell B, in particular wherein cell A is associated with (e.g. served by) network node A and/or wherein cell B is associated with (e.g. served by) network node B. Thus, when in the following describing a handover between two cells, it may alternatively or in addition be understood as a handover between two corresponding network nodes, and vice versa.

Compared to a scenario, in which a repetition of all FCHO preparations is performed after (completing) a re-establishment procedure initiated by a UE for (re-)connecting to a wireless communication network after a failure affecting a radio link of the UE has occurred, the described aspects may be advantageous in terms of at least one of speed, efficiency or robustness when preparing and/or using (fast) CHO, in particular failure scenarios. More specifically, by retaining at least a part of conditional handover information (e.g. associated with a UE) and/or of conditional handover resources (e.g. reserved by a network node for the UE) during a re-establishment procedure following a failure affecting a radio link of the UE, a time and/or a signaling overhead required for (re-)enabling FCHO for that UE may be reduced, in particular as compared with first releasing all of said information/resources and then repeating all FCHO preparations (i.e. obtaining/providing CHO information and/or reserving CHO resources) afterwards. By reducing the required time and/or signaling overhead, the described aspects may allow for (re-)enabling FCHO for a UE and/or updating the FCHO preparations for the UE in a faster and more efficient manner. In addition, since the described aspects may allow to provide FCHO configurations to the UE faster as compared with first releasing and then repeating all FCHO preparations, the UE may be prevented from experiencing further failures once the re-establishment procedure has been completed successfully. Thus, the described aspects may in addition allow for more robust FCHO.

Receiving the conditional handover information from the first network node may for example be part of preparing one or more conditional handovers of the user equipment. Preparing one or more conditional handovers of a user equipment may for example be referred to as conditional handover preparations for the user equipment. Preparing one or more conditional handovers of a user equipment, i.e. conditional handover preparations for the user equipment, may comprise receiving, by the user equipment, conditional handover information and/or reserving, by at least one network node, conditional handover resources for the user equipment. Conditional handover preparations may for example prepare a user equipment and/or one or more network nodes for one or more conditional handovers of the user equipment within the one or more network nodes. Thus, conditional handover preparations for a user equipment may for example allow for performing one or more conditional handovers of the user equipment, in particular based on the conditional handover preparations for the user equipment. Conditional handover preparations may for example be carried out prior to one or more conditional handovers of the user equipment.

The conditional handover information may for example comprise or correspond to information supporting one or more conditional handovers. A handover may for example be understood as a change of the serving cell of a user equipment. The serving cell of the user equipment may for example serve the user equipment. In other words, a handover may, e.g., be understood as a procedure in which a UE switches from a first cell (currently) serving the UE to a second cell (henceforth) serving the UE. The serving cell may for example correspond to the serving cell as it is defined in 3GPP specification 36.331. Yet put differently, a handover may, e.g., be understood as a process of transferring an ongoing call or data session from one channel connected to a core network of a wireless communication network to another channel connected to the core network.

A conditional handover may be understood as a handover which is performed or executed based on or in response to one or more handover conditions (or handover execution conditions) being met. In other words, in an example, performing or executing a conditional handover may comprise determining that one or more conditional handover conditions are met and, based on or in response to determining that the one or more conditional handover conditions are met, performing or executing the conditional handover. To this end, in an example, the conditional handover information may comprise one or more conditional handover conditions and/or one or more conditional handover configurations. In an example, the one or more conditional handover conditions may be provided by a network node currently serving the user equipment (e.g. the source gNB of the user equipment).

A conditional handover condition may for example comprise one or more, in particular one or two, trigger conditions for triggering a handover. A trigger condition may be associated with a reference signal type, wherein, in an example, a trigger condition may be associated with a single reference signal type. A reference signal (of a corresponding reference signal type) may for example comprise or correspond to a Channel Status Information Reference Signal (CSI-RS), a Physical Data Shared Channel Demodulation Reference Signal (PDSCH DMRS), a Physical Downlink Control Channel Demodulation Reference Signal (PDCCH DMRS), a Physical Broadcast Channel Demodulation Reference Signal (PBCH DMRS), a Phase Tracking Reference Signal (PTRS), a Tracking Reference Signal or the like. A trigger condition may for example comprise at least one trigger quantity. A trigger condition may in particular comprise at most two different trigger quantities. A trigger quantity may for example correspond to a Reference Signal Received Power (RSRP), a Reference Signal Received Quality (RSRQ), a Signal to Interference plus Noise Ratio (SINR) or the like. A trigger condition may be based on at least one threshold, at least one hysteresis and/or at least one offset, in particular wherein the threshold, hysteresis or offset is associated with at least one trigger quantity. In an example, a conditional handover condition comprises one or more measurement events. A measurement event may for example be understood as a predefined measurement report type such as, e.g., an A1, A2, A3, A4, A5, A6, B1, or B2 event, for instance according to 3GPP specification 38.331. In an example, a conditional handover condition may refer to a measurement ID associating a measurement object with a reporting configuration. A measurement object may comprise or correspond to an object on which the user equipment shall perform a measurement. A reporting configuration may define a measurement event, in particular an A3 or A5 measurement event, which triggers execution of a conditional handover.

A conditional handover configuration may for example comprise or correspond to a configuration associated with a network node that allows for performing a handover towards the network node. In an example, the one or more conditional handover configurations may be provided by one or more network nodes towards which a handover shall be performed, i.e. target network nodes (e.g. target gNBs). In an example, applying a conditional handover configuration provided by such a target network node may cause performing a conditional handover towards the target network node. In other words, a conditional handover configuration may be used for executing or performing a conditional handover towards a target network node.

In an example, the conditional handover information may comprise or correspond to fast or consecutive conditional handover information supporting fast or consecutive conditional handovers. Herein, the terms fast conditional handover (FCHO) and consecutive conditional handover (consecutive CHO) are used interchangeably. Fast or consecutive conditional handovers may for example be performed between one or more cells prepared for fast or consecutive conditional handovers. In an example, fast or consecutive conditional handovers may enable fast cell switching (FCS) for a user equipment between cells having been prepared for fast or consecutive conditional handovers. To this end, in an example, fast or consecutive conditional handover information, in particular being provided by a network node to a user equipment as part of a single command, may for example comprise or correspond to information supporting at least two consecutive conditional handovers. In other words, in an example, a user equipment may perform two or more consecutive conditional handovers based on fast or consecutive conditional handover information. As a result, the user equipment may perform the two or more consecutive conditional handovers without having to wait for further conditional handover information to be provided by the wireless communication network after each handover. In an example, conditional handover preparations for fast or consecutive conditional handovers may be carried out with one or more neighbor cells of the serving cell of the user equipment. For example, a neighbor cell of the serving cell may be located adjacent or near the serving cell. Being located near may for example mean that a distance between the neighbor cell and the serving cell is less than a predetermined distance threshold. In an example, when executing one or more fast or consecutive conditional handovers, the user equipment may evaluate a corresponding (sub-)set of conditional handover conditions after each cell change, i.e. after each handover.

In an example, the re-establishment procedure may comprise or correspond to a procedure for re-establishing a radio link between the user equipment and a wireless communication network, in particular wherein the wireless communication network comprises the first network node. That the re-establishment procedure follows the failure may for example mean that the re-establishment procedure is performed based on, in response to, subsequent to or as a consequence of the failure. The re-establishment procedure may for example comprise at least one of transmitting, by the user equipment, a request for performing a re-establishment procedure to a second network node; receiving, by the user equipment, a re-establishment message from the second network node; or transmitting, by the user equipment, a re-establishment complete message to the second network node. In an example, the re-establishment procedure may comprise or correspond to a Radio Resource Control (RRC) connection reestablishment procedure.

Retaining the at least a part of the conditional handover information during a re-establishment procedure may for example mean that the at least a part of the conditional handover information are retained
- based on, in response to or after transmitting, by the user equipment, a request for performing the re-establishment procedure to a second network node;
- as part of or during the re-establishment procedure;
- until receiving, by the user equipment, a re-establishment message from a second network node;
- until transmitting, by the user equipment, a re-establishment complete message to a second network node;
- until the re-establishment procedure has been completed; and/or
- until a time having passed since transmitting, by the user equipment, a request for performing the re-establishment procedure to a second network node exceeds a predetermined expiry time, in particular if no re-establishment message has been received, by the user equipment, within the predetermined expiry time from the second network node.

The predetermined expiry time may for example comprise or correspond to a threshold time period. Transmitting, by the user equipment, a request for performing the re-establishment procedure to the second network node may for example comprise resending the request for performing the re-establishment procedure to the second network node at least once. If the user equipment does not receive a re-establishment message from the second network node within the predetermined expiry time, in particular despite resending the request at least once, the retained conditional handover information may for example be released by the user equipment. In this way, (storage) resources of the user equipment may not be unnecessarily allocated.

The failure affecting a radio link of the user equipment may for example correspond to a radio link failure or a handover failure. A radio link failure may for example be understood as a disconnection of the user equipment from a wireless communication network, in particular from a wireless communication network comprising the first network node. A handover failure may for example be understood as a radio link failure occurring during execution of a handover of the user equipment, in particular from the first network node and/or towards a target network node.

The radio link being affected by the failure may for example be a radio link between the user equipment and a wireless communication network, in particular wherein the wireless communication network comprises the first network node. The radio link may in particular be a radio link between the user equipment and the first network node. Alternatively, the radio link may be a radio link between the user equipment and a network node comprised by the wireless communication network different from the first network node. For example, the user equipment may already have performed one or more conditional handovers before the failure occurs.

In an example, the instructions, when executed by the at least one processor, may further cause the user equipment to store, in particular temporarily, at least a part of the conditional handover information having been received by the user equipment from the first network node, in particular wherein storing the at least a part of the conditional handover information is performed prior to the retaining at least a part of the conditional handover information.

Retaining the at least a part of the conditional handover information during the re-establishment procedure does not exclude that at least a part of the conditional handover information may for example (also) be retained after the re-establishment procedure has been completed. Thus, in an example, the user equipment may (e.g. continue to) retain at least a part of the conditional handover information having been retained during the re-establishment procedure (even) after the re-establishment procedure has been completed. In an example, the instructions, when executed by the at least one processor, may further cause the user equipment to use at least a part of the conditional handover information having been (continuously) retained by the user equipment for one or more conditional handovers that may be performed after the re-establishment procedure has been completed. By (re-)using at least a part of the retained conditional handover information, e.g. after the re-establishment procedure, a time and/or a signaling overhead required for (re-)enabling FCHO for the UE may advantageously be reduced.

In an example, the instructions, when executed by the at least one processor, may further cause the user equipment to transmit, in particular prior to receiving the conditional handover information from the first network node, a measurement report to the first network node. The measurement report may for example comprise measurement information about at least one measurement quantity (e.g. RSRP, RSRQ, SINR or the like). Transmitting the measurement report to the first network node may initiate conditional handover preparations for the user equipment. Thus, the user equipment may for example receive the conditional handover information based on or in response to transmitting the measurement report to the first network node.

In an example, the instructions, when executed by the at least one processor, may further cause the user equipment to monitor one or more conditional handover conditions comprised by the conditional handover information having been received from the first network node. The monitored conditional handover conditions may for example comprise or correspond to conditional handover conditions for a conditional handover from the first network node and/or to at least one further network node, in particular wherein the at least one further network node serves one or more neighbor cells of a cell served by the first network node. The user equipment may for example monitor the one or more conditional handover conditions based on or after receiving the conditional handover information from the first network node. Further, the user equipment may for example monitor the one or more conditional handover conditions prior to the failure affecting the radio link of the user equipment.

In an example, the instructions, when executed by the at least one processor, may further cause the user equipment to detect the failure affecting the radio link of the user equipment. For example, the failure may be detected by the user equipment itself. For example, the user equipment may itself detect a radio link failure or a handover failure. Alternatively, detecting the failure may comprise receiving, by the user equipment, an indication that the failure has occurred. Said indication may for example be provided by a wireless communication network, in particular by the wireless communication network comprising the first network node. In an example, the failure may be detected after the user equipment has received the conditional handover information from the first network node and/or during monitoring the one or more conditional handover conditions.

Based on or in response to detecting the failure, the user equipment may for example initiate a re-establishment procedure for re-establishing a radio link between the user equipment and a wireless communication network, in particular wherein the wireless communication network comprises the first network node. To this end, the user equipment may for example select a network node with which the re-establishment procedure shall be performed.

The instructions, when executed by the at least one processor, may further cause the user equipment to perform:
- receiving, from the first network node, an indication to retain at least a part of the conditional handover information during a re-establishment procedure following a failure affecting a radio link of the user equipment, in particular wherein the indication is received in conjunction with the conditional handover information.

Receiving an indication to retain the at least a part of the conditional handover information may for example be understood as being requested to retain the at least a part of the conditional handover information. Thus, in an example, the user equipment may retain the at least a part of the conditional handover information based on receiving the indication. Alternatively or in addition, however, the user equipment (itself) may be (pre-)configured to and/or capable of deciding when to retain the at least a part of the conditional handover, in particular without receiving a corresponding indication. Receiving said indication may be advantageous in that it allows for the retaining the at least a part of the conditional handover information even if the user equipment (itself) may not be (pre-)configured to and/or capable of deciding when to do so such as it may be the case, e.g., for older user equipment.

Receiving the indication in conjunction with the conditional handover information may for example be understood as receiving the indication together, jointly and/or simultaneously with the conditional handover information. Thus, the conditional handover information and the indication may for example both be received as part of a single message received by the user equipment from the first network node. Receiving the indication in conjunction with the conditional handover information may be advantageous in terms of signaling time and signaling overhead. Alternatively, however, the indication may be received separately from the conditional handover information, e.g. such that the conditional handover information and the indication are received as part of at least two different messages received by the user equipment from the first network node.

The instructions, when executed by the at least one processor, may further cause the user equipment to perform:
- detecting a failure affecting a radio link of the user equipment; and
- based on detecting the failure, retaining the at least a part of the conditional handover information.

In an example, the failure may be detected by the user equipment itself. For example, the user equipment may itself detect a radio link failure or a handover failure. Alternatively, detecting the failure may comprise receiving an indication that a failure has occurred. Said indication may for example be provided by a wireless communication network, e.g. the wireless communication network comprising the first network node.

Retaining the at least a part of the conditional handover information based on detecting the failure may for example mean that the at least a part of the conditional handover information is retained in response to or subsequent to detecting the failure. In other words, in an example, first the failure is detected and then, in reaction to detecting the failure, the at least a part of the conditional handover information is retained.

As described above, retaining at least a part of the conditional handover information after a failure advantageously reduces the time and signaling overhead required for (re-)enabling FCHO for a UE having experienced the failure as compared with first releasing all of the information and then repeating all FCHO preparations after (completing) the re-establishment procedure following the failure.

The instructions, when executed by the at least one processor, may further cause the user equipment to perform:
- determining that, for a network node having been selected by the user equipment for the re-establishment procedure, no conditional handover information were included in the conditional handover information having been received by the user equipment from the first network node; and
- based on the determining, retaining the at least a part of the conditional handover information.

That for the selected network node no conditional handover information were included in the conditional handover information having been received by the user equipment may for example mean that the selected network node is a network node not having been previously prepared for a conditional handover of the user equipment. In other words, the determining that, for the network node having been selected, no conditional handover information were included in the conditional handover information, may comprise or correspond to determining that the network node having been selected has not been prepared for a conditional handover of the user equipment. In contrast to releasing/deleting all conditional handover information, when it is determined that a network node not having been prepared for a conditional handover of the user equipment is selected for a re-establishment procedure, retaining at least a part of the conditional handover information after a failure, as described above, is advantageous in terms of time and signaling overhead required for (re-)enabling FCHO for the UE.

The instructions, when executed by the at least one processor, may further cause the user equipment to perform:
- receiving, from a second network node, renewed conditional handover information, in particular wherein the renewed conditional handover information are received during the re-establishment procedure.

The renewed conditional handover information may for example be understood as second conditional handover information, wherein the conditional handover information having been received by the user equipment from the first network node may be understood as first conditional handover information. As will be described in detail below, renewed conditional handover may allow for updating, complementing and/or cleaning up conditional handover information having been received previously by the user equipment. Such an approach may in particular be faster and more efficient then first releasing all CHO information and then again obtaining CHO information after (completing) a re-establishment procedure.

The renewed conditional handover information may comprise:
- updated conditional handover information for updating at least a part of the conditional handover information having been received by the user equipment from the first network node;
- additional conditional handover information, wherein the additional conditional handover information is associated with at least one additional network node for which no conditional handover information were included in the conditional handover information having been received by the user equipment from the first network node, in particular wherein the at least one additional network node comprises or corresponds to the second network node; and/or
- conditional handover release information indicating that at least a part of the conditional handover information having been received by the user equipment from the first network node shall be released.

The updated conditional handover information may in particular comprise or correspond to more recent conditional handover information for at least one network node for which conditional handover information has been previously received, in particular wherein the conditional handover information having been previously received for the at least one network node is outdated or obsolete. The at least a part of the conditional handover information to be updated may in particular be part of or correspond to conditional handover information having been retained by the user equipment (since information not having been retained cannot be updated).

The additional conditional handover information may in particular not be part of or may in particular not correspond to conditional handover information having been previously received and/or retained by the user equipment. That for the at least one additional network node no conditional handover information were included in the conditional handover information having been previously received may for example mean that the at least one additional network node is a network node not having been prepared for a conditional handover of the user equipment previously. That the additional conditional handover information is associated with the at least one additional network node may for example mean that the additional conditional handover information supports or enables one or more conditional handovers from and/or to the at least one additional network node.

The conditional handover release information may in particular identify one or more network nodes conditional handover information of which are to be released by the user equipment. The at least a part of the conditional handover information that shall be released may in particular be part of or correspond to conditional handover information having been retained by the user equipment (since information not having been retained cannot be released).

Receiving, as part of the renewed conditional handover, updated conditional handover information, additional conditional handover information and/or conditional handover release information may allow for updating, complementing and/or cleaning up conditional handover information having been received previously by the user equipment. Such an approach may in particular be faster and more efficient then first releasing all CHO information and then again obtaining CHO information after (completing) a re-establishment procedure.

The instructions, when executed by the at least one processor, may further cause the user equipment to perform, based on the renewed conditional handover information, in particular during the re-establishment procedure:
- updating at least a part of the conditional handover information having been received by the user equipment from the first network node;
- releasing at least a part of the conditional handover information having been received by the user equipment from the first network node; and/or
- storing additional conditional handover information associated with at least one additional network node for which no conditional handover information were included in the conditional handover information having been received by the user equipment from the first network node, in particular wherein the at least one additional network node comprises or corresponds to the second network node.

The at least a part of the conditional handover information that is to be updated may for example be updated based on the updated conditional handover information. The at least a part of the conditional handover information that is to be released may for example be released based on the conditional handover release information. The additional conditional handover information to be stored may correspond to the additional conditional handover information comprised by the renewed conditional handover information.

By updating and/or releasing respective at least parts of the conditional handover information and/or storing additional conditional handover information, in particular during a re-establishment procedure following a failure affecting a radio link of the user equipment, the FCHO preparations for the user equipment may in particular be performed and updated in a more efficient manner than when repeating all FCHO preparations after completion of the re-establishment procedure, as described above.

In an example, the instructions, when executed by the at least one processor, may further cause the user equipment to transmit a re-establishment complete message to the second network node, in particular wherein the re-establishment complete message acknowledges that the re-establishment procedure has been completed. The re-establishment complete message may in particular be transmitted based on or in response to receiving the renewed conditional handover information from the second network node.

In an example, the instructions, when executed by the at least one processor, may further cause the user equipment to monitor one or more conditional handover conditions comprised by the conditional handover information having been retained and/or having been updated by the user equipment and/or comprised by the additional conditional handover information having been stored (e.g. temporarily) by the user equipment. In an example, the user equipment may monitor the one or more conditional handover conditions based on or in response to the updating at least a part of the conditional handover information and/or to the storing additional conditional handover information. Further, the user equipment may monitor the one or more conditional handover conditions based on or after transmitting a re-establishment complete message to the second network node. As described above, in particular by (re-)using at least a part of the retained conditional handover information, a time and/or a signaling overhead required for (re-)enabling FCHO for the UE may advantageously be reduced.

If, during monitoring the one or more conditional handover conditions, a conditional handover condition is met, the user equipment may then perform a corresponding handover. Thus, the instructions, when executed by the at least one processor, may further cause the user equipment to determine that one or more conditional handover conditions are met and, based on or in response to determining that the one or more handover conditions are met, perform a corresponding conditional handover, e.g. by applying a corresponding conditional handover configuration.

Based on or after performing a conditional handover for which one or more conditional handover conditions have been determined, by the user equipment, to be met, the user equipment may for example (again) monitor one or more conditional handover conditions comprised by the conditional handover information having been retained and/or having been updated by the user equipment and/or comprised by the additional conditional handover information having been stored (e.g. temporarily) by the user equipment.

Transmitting, by the first network node, the conditional handover information to the user equipment may for example be part of preparing one or more conditional handovers of the user equipment, as described above.

That the first network node indicates, to the user equipment, to retain at least a part of the conditional handover information may for example mean that the first network node requests, demands or causes the user equipment to retain the at least a part of the conditional handover information.

In an example, the instructions stored by the at least one memory comprised by the first network node, when executed by the at least one processor comprised by the first network node, may further cause the first network node to receive, in particular prior to transmitting the conditional handover information to the user equipment, a measurement report from the user equipment. In an example, receiving the measurement report may cause the first network node to prepare one or more conditional handovers of the user equipment, i.e. to perform conditional handover preparations for the user equipment. Thus, the first network node may for example transmit the conditional handover information to the user equipment based on or in response to receiving the measurement report from the user equipment.

To this end, the first network node may for example transmit a request for preparing one or more (fast) conditional handovers of the user equipment to at least one further network node, in particular wherein the at least one further network node may be a neighbor network node of the first network node. As part of or in conjunction with the request for preparing one or more conditional handovers of the user equipment, the first network node may request the at least one further network node to provide conditional handover information and/or to reserve conditional handover resources for the user equipment.

The first network node may further receive, from the at least one further network node, conditional handover information, in particular based on or in response to requesting the conditional handover information. The received conditional handover information may for example support one or more conditional handovers of the user equipment from any of the first network node and the at least one further network node to any other of the first network node and the at least one further network node (e.g. from the first network node to one of the at least one further network node, from one of the at least one further network node to the first network node and/or from one of the at least one further network node to another one of the at least one further network node).

In an example, the first network node may further receive, from a second network node having received a request for performing a re-establishment procedure from the user equipment, a request to retrieve information about a context of the user equipment. Based on or in response to receiving the request to retrieve information about a context of the user equipment, the first network node may further transmit context information for the user equipment to the second network node.

The indication to retain at least a part of the conditional handover information may be transmitted either in conjunction with the conditional handover information or separately from the conditional handover information.

Transmitting the indication in conjunction with the conditional handover information may for example be understood as transmitting the indication together, jointly and/or simultaneously with the conditional handover information. Thus, the conditional handover information and the indication may for example both be transmitted as part of a single message transmitted by the first network node. Transmitting the indication in conjunction with the conditional handover information may be advantageous in terms of signaling time and signaling overhead. Transmitting the indication separately from the conditional handover information may for example be understood as transmitting the conditional handover information and the indication as part of at least two different messages. The latter may be advantageous in terms of compliance with bandwidth or message size limitations.

The instructions stored by the at least one memory comprised by the first network node, when executed by the at least one processor comprised by the first network node, may further cause the first network node to perform:
- indicating, to the user equipment, to retain the at least a part of the conditional handover information if a network node, for which no conditional handover information were included in the conditional handover information having been transmitted by the first network node to the user equipment, is selected by the user equipment for the re-establishment procedure.

Similar as above, that for the selected network node no conditional handover information were included in the conditional handover information having been transmitted by the first network node to the user equipment may for example mean that the selected network node is a network node not having been previously prepared for a conditional handover of the user equipment. In contrast to the scenario, in which all conditional handover information are released/deleted, when it is determined that a network node not having been prepared for a conditional handover of the user equipment is selected for a re-establishment procedure, retaining at least a part of the conditional handover information after a failure is advantageous in terms of time and signaling overhead required for (re-)enabling FCHO for the UE.

The instructions stored by the at least one memory comprised by the first network node, when executed by the at least one processor comprised by the first network node, may further cause the first network node to perform:
- retaining at least a part of conditional handover information associated with the user equipment and having been stored by the first network node; and/or
- retaining at least a part of conditional handover resources having been reserved by the first network node for the user equipment.

Besides the conditional handover information which may be received, stored and/or retained by the user equipment, also the first network node may store conditional handover information associated with the user equipment. In other words, in an example, the instructions may further cause the first network node to store conditional handover information associated with the user equipment. The storing of the conditional handover information associated with the user equipment may in particular be performed prior to retaining the at least a part of the conditional handover information.

Further, the first network node may reserve conditional handover resources for the user equipment. In other words, in an example, the instructions may further cause the first network node to reserve conditional handover resources for the user equipment. Reserving conditional handover resources for the user equipment may in particular be performed prior to retaining the at least a part of conditional handover resources. Retaining reserved conditional handover resources may for example be understood as continuously reserving the conditional handover resources.

In an example, the first network node may retain at least a part of, in particular all of, conditional handover information associated with the user equipment and having been stored by the first network node and/or at least a part of, in particular all of, conditional handover resources having been reserved by the first network node for the user equipment
- based on, in response to or after detecting a failure affecting a radio link of the user equipment;
- based on, in response to or after receiving an indication that a re-establishment procedure following a failure affecting a radio link of the user equipment has been initiated by the user equipment;
- as part of or during the re-establishment procedure;
- until the re-establishment procedure has been completed; and/or
- until a time having passed since the detecting the failure exceeds a predetermined expiry time, in particular if no indication to retain conditional handover information and/or conditional handover resources has been received, by the first network node, within the predetermined expiry time.

Similar as above, the failure may for example be detected by the first network node itself. For example, the first network node may itself detect a radio link or handover failure affecting a radio link of the user equipment. Alternatively, detecting the failure may comprise receiving, by the first network node, an indication that the failure has occurred. Said indication may for example be provided by a wireless communication network, in particular by the wireless communication network comprising the first network node. In particular, the indication may be provided by a second network node having been selected by the user equipment for performing the re-establishment procedure. In an example, the failure may be detected after the first network node has transmitted the conditional handover information to the user equipment. Similar as above, the predetermined expiry time may for example comprise or correspond to a threshold time period. Thus, in an example, the first network node may in particular retain the at least a part of (e.g. all of) conditional handover information and/or the at least a part of (e.g. all of) conditional handover resources (at least) until the re-establishment procedure has been completed.

Further, in an example, the first network node may (e.g. continue to) retain at least a part of the conditional handover information and/or of the conditional handover resources having been retained, e.g. during the re-establishment procedure, (even) after the re-establishment procedure has been completed. To this end, the first network node may for example receive, in particular as part of or during the re-establishment procedure, an (e.g. implicit) indication of respective parts of the conditional handover information and/or of the conditional handover resources that have been selected to be retained (even) after the re-establishment procedure has been completed. Thus, in an example, the first network node may (e.g. continue to) retain at least a part of the conditional handover information and/or of the conditional handover resources having been retained, e.g. during the re-establishment procedure, based on or in response to receiving said (e.g. implicit) indication, e.g. from a second network node. In an example, at least a part of the (continuously) retained conditional handover information and/or of the (continuously) retained conditional handover resources may then be used for at least one conditional handover that may be performed after the re-establishment procedure has been completed. By retaining, by the first network node, at least a part of conditional handover information associated with the user equipment and/or of conditional handover resources reserved by the first network node for the user equipment instead of first releasing all of said information/resources and then repeating all FCHO preparations, a time and/or a signaling overhead required for (re-)enabling FCHO for that user equipment, in particular after a failure affecting a radio link of the user equipment has occurred, may be reduced.

The instructions stored by the at least one memory comprised by the first network node, when executed by the at least one processor comprised by the first network node, may further cause the first network node to perform:
- receiving, from a second network node, in particular during the re-establishment procedure, an indication to perform at least one of the steps of claim 10, in particular wherein the instructions, when executed by the at least one processor, cause the first network node to perform one or more of the steps of claim 10 based on receiving one or more corresponding indications from the second network node.

Similar as above, receiving an indication to perform one or more steps may for example be understood as being requested to perform the one or more steps. The indication may for example comprise an indication of at least one starting time, at least one end time and/or at least one time period for the retaining the at least a part of conditional handover information and/or conditional handover resources, as described above (e.g. after detecting a failure affecting a radio link of the user equipment, during the re-establishment procedure and/or until the re-establishment procedure has been completed). Further, the indication may comprise an indication to (e.g. continue to) retain at least a part of the conditional handover information and/or of the conditional handover resources (even) after the re-establishment procedure has been completed, as described above.

Alternatively or in addition to receiving the indication, the first network node (itself) may be (pre-)configured to and/or capable of deciding when to perform the one or more steps according to claim 10, in particular without receiving a corresponding indication. Receiving said indication may, however, be advantageous in that it allows for said steps to be performed even if the first network node (itself) may not be (pre-)configured to and/or capable of deciding when to perform said steps as it may be the case, e.g., for older network nodes.

The instructions stored by the at least one memory comprised by the first network node, when executed by the at least one processor comprised by the first network node, may further cause the first network node to transmit, to a second network node, in particular during the re-establishment procedure:
- updated conditional handover information for updating at least a part of the conditional handover information having been transmitted by the first network node to the user equipment and/or for updating at least a part of conditional handover information associated with the user equipment and having been stored by the second network node, in particular wherein the updated conditional handover information is associated with the first network node; and/or
- additional conditional handover information associated with at least one additional network node for which no conditional handover information were included in the conditional handover information having been transmitted by the first network node to the user equipment, in particular wherein the additional conditional handover information is associated with the first network node and with the second network node.

Similar as above, the updated conditional handover information may in particular comprise or correspond to more recent conditional handover information for at least one network node for which conditional handover information has been previously received, in particular wherein the conditional handover information having been previously received for the at least one network node is outdated or obsolete. The at least a part of the conditional handover information to be updated may in particular be part of or correspond to conditional handover information having been retained by the user equipment (since information not having been retained cannot be updated).

Also similar as above, the additional conditional handover information may in particular not be part of or may in particular not correspond to conditional handover information having been previously received and/or retained by the user equipment. That for the at least one additional network node no conditional handover information were included in the conditional handover information having been previously received may for example mean that the at least one additional network node is a network node not having been prepared for a conditional handover of the user equipment previously. That the additional conditional handover information is associated with the at least one additional network node may for example mean that the additional conditional handover information supports or enables one or more conditional handovers from and/or to the at least one additional network node. Thus, that the additional conditional handover information is associated with the first network node and with the second network node may for example mean that the additional conditional handover information supports or enables one or more conditional handovers in between the first network node and the second network node.

Transmitting updated and/or additional conditional handover information to the second network node may allow for updating and/or complementing conditional handover information being stored by the second network node for the user equipment. Alternatively or in addition, at least a part of the updated and/or additional conditional handover information may be passed on by the second network node to the user equipment, e.g. as part of renewed conditional handover information, thus allowing to update conditional handover information having been previously transmitted by the first network node to the user equipment.

The request for performing a re-establishment procedure received by the second network node from the user equipment may for example comprise or correspond to an RRC connection reestablishment request. That said request includes an indication for identifying a first network node being associated with the user equipment may for example mean that the request includes an indication for identifying a last serving node of the user equipment. The last serving node of the user equipment may for example correspond to the serving node serving the user equipment before and/or until a failure affecting a radio link of the user equipment occurred. The request for performing the re-establishment procedure may in an example be transmitted by the user equipment to the second network node based on, in response to, subsequent to or as a consequence of such a failure.

The context information for the user equipment may for example comprise or correspond to information about a context of the user equipment. A UE context may be a block of information in a network node associated to the respective active UE. The block of information may contain the necessary information required to maintain one or more services towards the active UE, for instance UE state information, security information, UE capability information and/or the identities of the UE-associated connection. Requesting, from the first network node, context information for the user equipment may for example comprise or correspond to transmitting, to the first network node, a request to retrieve information about a context of the user equipment. Receiving, from the first network node, context information for the user equipment may for example comprise or correspond to receiving information about the context of the user equipment, e.g. as part of a context retrieval response transmitted to the second network node by the first network node.

Based on the indication from the second network node to the first network node to retain at least a part of conditional handover information associated with the user equipment and/or at least a part of conditional handover resources having been reserved for the user equipment, the first network node may retain at least a part of the conditional handover information and/or at least a part of the conditional handover resources. As a result, as described above, a time and/or a signaling overhead required for (re-)enabling FCHO for that user equipment, in particular after a failure affecting a radio link of the user equipment has occurred, may be reduced.

Indicating, to the first network node, to retain the at least a part of the conditional handover information and/or the at least a part of the conditional handover resources may for example comprise indicating, to the first network node, at least one starting time, at least one end time and/or at least one time period for the retaining the at least a part of the conditional handover information and/or the at least a part of the conditional handover resources, as described above (e.g. after detecting a failure affecting a radio link of the user equipment, during the re-establishment procedure and/or until the re-establishment procedure has been completed). Further, the indication may comprise an indication to (e.g. continue to) retain at least a part of the conditional handover information and/or of the conditional handover resources (even) after the re-establishment procedure has been completed, as described above. In an example, at least a part of the (continuously) retained conditional handover information and/or of the (continuously) retained conditional handover resources may then be used for at least one conditional handover that may be performed after the re-establishment procedure has been completed.

In an example, the second network node may further receive a request for preparing one or more (fast) conditional handovers of the user equipment from the first network node, in particular prior to receiving the request for performing a re-establishment procedure from the user equipment and/or prior to a failure affecting a radio link of the user equipment.

Based on or in response to receiving the request for preparing one or more (fast) conditional handovers, the second network node may for example transmit conditional handover information to the first network node and/or may reserve conditional handover resources for the user equipment. The transmitted conditional handover information may for example support one or more conditional handovers of the user equipment from any of the first network node and at least one further network node to the second network node and/or from the second network node to any of the first network node and the at least one further network node (e.g. from the first network node to the second network node, from one of the at least one further network node to the second network node, from the second network node to the first network node and/or from the second network node to one of the at least one further network node).

The conditional handover information received by the second network node as part of the context information may not include conditional handover information for the second network node.

In other words, in an example, the second network node may be a network node not having been previously prepared for a conditional handover of the user equipment. In contrast to the scenario of releasing all conditional handover preparations (e.g. stored CHO information and/or resources reserved for CHO, when it is determined that a network node which has not been prepared for a conditional handover of the user equipment is selected for a re-establishment procedure (such as it may be the case for the second network node), the described approach is advantageous. By indicating, to the first network node, to retain at least a part of the conditional handover information and/or at least a part of the conditional handover resources even if the network node having been selected for the re-establishment procedure is a non-prepared node, a time and/or a signaling overhead required for (re-)enabling FCHO for the user equipment, in particular after a failure affecting a radio link of the user equipment has occurred, may advantageously be reduced.

The instructions stored by the at least one memory comprised by the second network node, when executed by the at least one processor comprised by the second network node, may further cause the second network node to perform:
- selecting respective parts of the conditional handover information and/or of conditional handover resources having been reserved for the user equipment to be retained or to be released.

Thus, the second network node may for example select a part of the conditional handover information to be retained, a part of the conditional handover information to be released, a part of the conditional handover resources to be retained and/or a part of the conditional handover resources to be released. In other words, the second network node may decide which part(s) of conditional handover preparations for the user equipment are to be kept and which ones are to be released. By letting the second network node, i.e. the network node to which the user equipment re-establishes, select (or decide) which part(s) of conditional handover preparations are to be retained and which are to be released, this selection/decision may in particular be performed during the re-establishment procedure which is particularly beneficial in order to update and/or (re-)enable FCHO during the re-establishment procedure.

The instructions stored by the at least one memory comprised by the second network node, when executed by the at least one processor comprised by the second network node, may further cause the second network node to perform:
- indicating, to the first network node, the parts of the conditional handover information and/or of the conditional handover resources that have been selected to be released.

Indicating, to the first network node, the parts of the conditional handover information and/or of the conditional handover resources that have been selected to be released may in particular comprise implicitly indicating the parts of the conditional handover information and/or of the conditional handover resources that have been selected to be retained. For example, if the second network node indicates to the first network node that conditional handover information and/or resources associated with a network node different from the first network node have been selected to be released, this may be an implicit indication to the first network node that conditional handover information associated with the user equipment and having been stored by the first network node and/or conditional handover resources having been reserved by the first network node for the user equipment shall be retained.

Thus, based on receiving said indication from the second network node, the first network node may for example retain at least a part of conditional handover information associated with the user equipment having been stored by the first network node and/or at least a part of conditional handover resources having been reserved by the first network node for the user equipment. Alternatively or in addition, based on receiving said indication from the second network node, the first network node may for example indicate, to at least one further network node associated with the parts of the conditional handover information and/or of the conditional handover resources that have been selected to be released, to release conditional handover information associated with the user equipment and having been stored by the at least one further network node and/or to release conditional handover resources having been reserved by the at least one further network node for the user equipment. In other words, in an example, the first network node may pass the indication on to the at least one further network node, in particular wherein conditional handover information and/or conditional handover resources associated with the at least one further network node have been selected to be released.

The instructions stored by the at least one memory comprised by the second network node, when executed by the at least one processor comprised by the second network node, may further cause the second network node to perform:
- indicating, to at least one further network node associated with the parts of the conditional handover information and/or of the conditional handover resources that have been selected to be released, to release conditional handover information associated with the user equipment and having been stored by the at least one further network node and/or to release conditional handover resources having been reserved by the at least one further network node for the user equipment.

Thus, alternatively or in addition to the first network node passing an indication of the parts of the conditional handover information and/or resources that have been selected to be released on to at least one further network node (as described above), in an example, the second network node (itself) may indicate the parts to be released to at least one further network node. As compared with first providing a corresponding indication to the first network node and then passing, by the first network node, this indication on to at least one further network node, indicating the parts to be released to at least one further network node by the second network node itself, in particular directly, requires less signaling overhead and time.

The instructions stored by the at least one memory comprised by the second network node, when executed by the at least one processor comprised by the second network node, may further cause the second network node to receive, from the first network node:
- updated conditional handover information for updating at least a part of conditional handover information having been transmitted by the first network node to the user equipment and/or for updating at least a part of the conditional handover information having been received by the second network node as part of the context information, in particular wherein the updated conditional handover information is associated with the first network node; and/or
- additional conditional handover information associated with at least one additional network node for which no conditional handover information were included in conditional handover information having been transmitted by the first network node to the user equipment, in particular wherein the additional conditional handover information is associated with the first network node and with the second network node.

The updated conditional handover information and/or the additional conditional handover information received by the second network node from the first network node may in particular correspond to the updated conditional handover information and/or the additional conditional handover information transmitted by the first network node to the second network node as it has been described above.

Receiving such updated and/or additional conditional handover information may in particular allow for updating and/or complementing conditional handover information having been received by the second network node as part of the context information. Alternatively or in addition, at least a part of the updated and/or additional conditional handover information may be passed on by the second network node to the user equipment, e.g. as part of renewed conditional handover information, thus allowing to update conditional handover information having been previously transmitted by the first network node to the user equipment.

The instructions stored by the at least one memory comprised by the second network node, when executed by the at least one processor comprised by the second network node, may further cause the second network node to indicate, to at least one further network node associated with the user equipment and/or with the first network node:
- that the user equipment is now served by the second network node;
- to retain at least a part of conditional handover information associated with the user equipment and having been stored by the at least one further network node; and/or
- to retain at least a part of conditional handover resources having been reserved by the at least one further network node for the user equipment.

That the at least one further network node is associated with the user equipment and/or with the first network node may for example mean that the at least one further network node has been prepared for a conditional handover of the user equipment, in particular from and/or to the first network node. In other words, in an example, the at least one further network node has been included in (fast) conditional handover preparations for the user equipment, said preparations e.g. having been performed before the failure affecting a radio link of the user equipment occurred. In an example, the at least one further network node may thus be a neighbor node of the serving node of the user equipment. Further, the at least one further network node may in particular be associated with a part of conditional handover information having been selected, by the second network node, to be retained, as described above. In other words, the at least one further network node may be a network node which the second network node has decided to keep in the (fast) conditional handover preparations for the user equipment.

Indicating that the user equipment is now served by the second network node may for example comprise or correspond to indicating that the second network node is the (new) serving node of the user equipment, for example as a result of or after initiation of the re-establishment procedure. In an example, said indicating comprises or corresponds to transmitting an identifier of the (new) serving node.

Similar as above, by retaining, by the at least one further network node, at least a part of conditional handover information associated with the user equipment and having been stored by the at least one further network node and/or at least a part of conditional handover resources having been reserved by the at least one further network node for the user equipment instead of first releasing all of said information/resources and then repeating all FCHO preparations, a time and/or a signaling overhead required for (re-)enabling FCHO for the user equipment, in particular after a failure, may advantageously be reduced.

The instructions stored by the at least one memory comprised by the second network node, when executed by the at least one processor comprised by the second network node, may further cause the second network node to perform:
- requesting, from at least one further network node associated with the user equipment and/or with the first network node, additional conditional handover information, in particular wherein the additional conditional handover information is associated with the second network node and the at least one further network node.

Being associated with the second network node and the at least one further network node may for example mean that the additional conditional handover information supports or enables one or more conditional handovers in between the second network node and one or more of the at least one further network node. Based on or in response to the second network node requesting the additional conditional handover information from the at least one further network node, the at least one further network node may for example transmit the additional conditional handover information to the second network node. In this way, the FCHO preparations for the user equipment may advantageously be complemented such as to efficiently include the (e.g. previously non-prepared) second network node in the FCHO preparations for the user equipment.

The instructions stored by the at least one memory comprised by the second network node, when executed by the at least one processor comprised by the second network node, may further cause the second network node to perform:
- transmitting, to the user equipment, renewed conditional handover information.

The renewed conditional handover information transmitted by the second network node to the user equipment may in particular correspond to the renewed conditional handover information having been received by the user equipment from the second network node, as described above. Similar as above, transmitting renewed conditional handover information to the user equipment allows to avoid a repetition of all FCHO preparations after completion of a re-establishment procedure which would cost additional delay and signaling overhead.

Based on or after transmitting the renewed conditional handover information to the user equipment, the second network node may further receive, from the user equipment, a re-establishment complete message, in particular wherein the re-establishment complete message acknowledges that the re-establishment procedure has been completed.

The instructions stored by the at least one memory comprised by the second network node, when executed by the at least one processor comprised by the second network node, may further cause the second network node to indicate, to the user equipment, to perform, based on the renewed conditional handover information:
- updating at least a part of conditional handover information having been received by the user equipment from the first network node;
- releasing at least a part of conditional handover information having been received by the user equipment from the first network node; and/or
- storing additional conditional handover information associated with at least one additional network node for which no conditional handover information were included in conditional handover information having been received by the user equipment from the first network node, in particular wherein the at least one additional network node comprises or corresponds to the second network node.

The steps of, based on renewed conditional handover information, updating at least a part of conditional handover information, releasing at least a part of conditional handover information and storing additional conditional handover information have already been described above for the user equipment. Indicating, to the user equipment, to perform these steps may thus be understood in analogy. Performing one or more of these steps allows to perform and/or update the FCHO preparations for the user equipment in a more efficient manner than when repeating all FCHO preparations after completion of the re-establishment procedure.

The instructions stored by the at least one memory comprised by the second network node, when executed by the at least one processor comprised by the second network node, may further cause the second network node to perform one or more of the steps of claims 13 to 23
- based on receiving the request for performing a re-establishment procedure;
- as part of or during a re-establishment procedure performed based on receiving the request;
- before a re-establishment message transmitted based on receiving the request is received; and/or
- before a re-establishment procedure performed based on receiving the request has been completed.

Performing a step based on receiving the request may for example mean that, first, the request is received and then a corresponding step is performed. Performing a step as part of or during a re-establishment procedure may for example mean that the re-establishment procedure comprises the step. The re-establishment message may for example be an RRC connection re-establishment message. That the re-establishment procedure has been completed may for example mean that a re-establishment complete message (e.g. an RRC connection re-establishment complete message) has been transmitted by the user equipment and/or has been received by the second network node.

As used herein, conditional handover information being associated with a particular network node may for example mean that the conditional handover information supports or enables one or more conditional handovers from and/or to the network node. In other words, conditional handover information that is associated with a particular network node may comprise one or more conditional handover configurations of the network node and/or one or more conditional handover conditions of the network node.

As used herein, retaining information (e.g. retaining conditional handover information) may be understood as keeping or maintaining said information or as continuing to store or save said information, in particular wherein said information may have been stored or saved (e.g. temporarily) prior to the retaining. As further used herein, retaining resources (e.g. retaining conditional handover resources) may be understood as continuing to allocate resources, in particular wherein said resources may have been reserved or allocated prior to the retaining, for example by a network node.

As used herein, updating information may be understood as modifying and/or replacing the information based on more recent information.

As used herein, releasing information may be understood as deleting the information. As further used herein, releasing resources may be understood as deallocating resources.

As used herein, an indication may for example comprise or correspond to a request, a message or a query.

As used herein, performing a second step in response to a first step may for example mean that the second step may be performed directly in response to the first step, e.g. without any intermediate steps in between the first step and the second step. Alternatively, performing a second step in response to a first step may mean that the second step may be performed (merely) after the first step, e.g. such that there may be at least one intermediate step in between the first step and the second step.

As used herein, at least a part of a set or a quantity such as, e.g., at least a part of conditional handover information, may be understood as a part of the set or the quantity or all of the set or the quantity. Thus, at least a part of conditional handover information may for example be understood as a part of or all of the conditional handover information. Similarly, at least a part of conditional handover resources may for example be understood as a part of or all of the conditional handover resources.

It is to be understood that the presentation of the embodiments disclosed herein is merely by way of examples and non-limiting.

Herein, the disclosure of a method step shall also be considered as a disclosure of means for performing the respective method step. Likewise, the disclosure of means for performing a method step shall also be considered as a disclosure of the method step itself.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

### BRIEF DESCRIPTION OF THE FIGURES

Some example embodiments will now be described with reference to the accompanying drawings in which
- FIG. 1: exemplarily illustrates a user equipment and various network nodes;
- FIG. 2: shows an example embodiment of a method according to the present disclosure;
- FIG. 3: shows another example embodiment of a method according to the present disclosure;
- FIG. 4: shows another example embodiment of a method according to the present disclosure;
- FIGS. 5A-5C: show an example of a signaling flow chart related to an exemplary embodiment of the disclosure;
- FIGS. 6A-6C: show another example of a signaling flow chart related to an exemplary embodiment of the disclosure;
- FIG. 7: shows a block diagram of an example of a user equipment;
- FIG. 8: shows a block diagram of an example of a network node; and
- FIG. 9: shows a schematic illustration of examples of tangible and non-transitory computer-readable storage media.

### DETAILED DESCRIPTION OF THE FIGURES

The following description serves to deepen the understanding of the present disclosure and shall be understood to complement and be read together with the description of example embodiments of the present disclosure as provided in the above SUMMARY section of this specification.

In the following an, an example wireless communication system, within which the present disclosure may be applied, is described. While the specific radio system in the examples below is a 5G/NR system, this is only to be considered a non-limiting example.

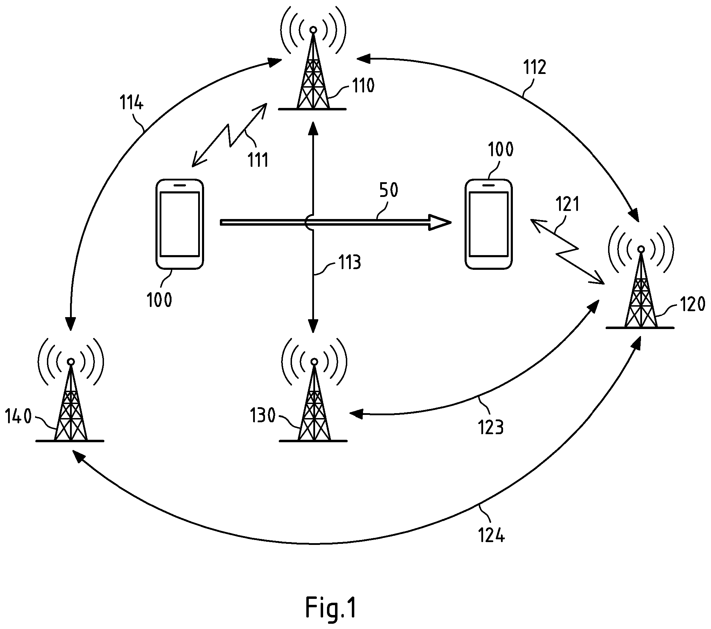

FIG. 1 exemplarily illustrates a UE 100 (an example of a user equipment according to the first exemplary aspect), a gNB 110 (an example of a first network node according to the second exemplary aspect), a gNB 120 (an example of a second network node according to the third exemplary aspect) and gNBs 130, 140 (examples of further network nodes). Taken together, the gNBs establish a wireless communication system or network serving a geographical area within which UE 100 is located.

UE 100 may be connected with gNB 110 and/or gNB 120 by means of radio links 111 and 121, respectively (e.g. corresponding to the 5G/NR Uu interface). Any of radio links 111, 121 may be considered as an example of a radio link that may be affected by failure. Although not illustrated, UE 100 may also be connected with gNBs 130 and 140. gNB 110 is connected to each of gNBs 120, 130, 140 by means of a corresponding radio link 112, 113, 114 (e.g. corresponding to the 5G/NR Xn interface). Similarly, gNB 120 is connected to each of gNBs 110, 130, 140 by means of a corresponding radio link 112, 123, 124. Each of radio links 111, 121, 112, 113, 114, 123, 124 enables transmitting/receiving information and/or signals in between the respective devices. The gNBs 110, 120, 130, 140 may be considered as neighboring gNBs respectively serving neighboring cells.

At some point in time, as indicated by arrow 50, UE 100 moves from a first position (start point of arrow 50) to a second position (end point of arrow 50). While at the first (left) position gNB 110 serves a serving cell of UE 100, at the second (right) position a cell served by gNB 120 has become the serving cell of UE 100. Thus, during a movement of UE 100 along arrow 50, a handover of UE 100 from gNB 110 (or a corresponding cell) to gNB 120 (or a corresponding cell) may have been performed, for example. Alternatively, during the movement of UE 100 along arrow 50, radio link 111 between UE 100 and gNB 110 may been affected by a failure. Following the failure, UE 100 may have initiated a re-establishment procedure towards gNB 120 such as to re-establish a connection to the wireless communication network by means of radio link 121.

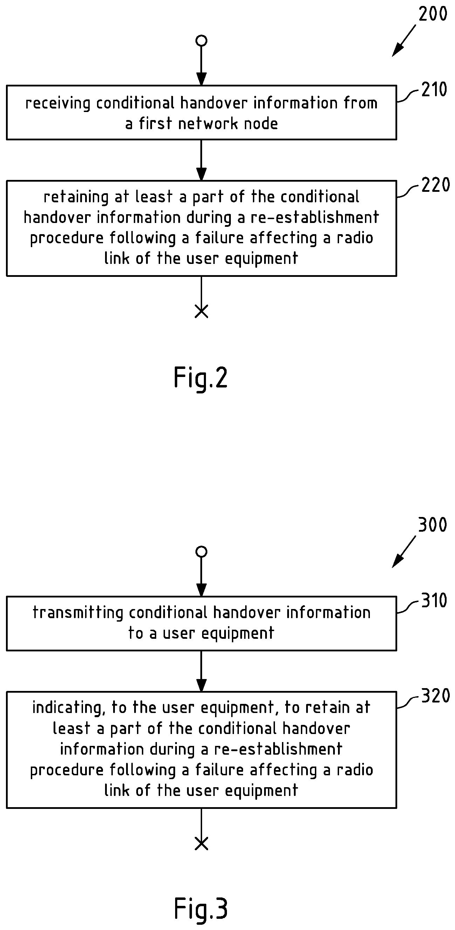

FIG. 2 shows an example embodiment 200 of the method according to the first exemplary aspect. Method 200 may for example be performed by the user equipment according to the first exemplary aspect. First, conditional handover information may be received from a first network node (action 210). Further, at least a part of the conditional handover information may be retained during a re-establishment procedure following a failure affecting a radio link of the user equipment (action 220).

FIG. 3 shows an example embodiment 300 of the method according to the second exemplary aspect. Method 300 may for example be performed by the first network node according to the second exemplary aspect. First, conditional handover information may be transmitted to a user equipment (action 310). Further, it may be indicated, to the user equipment, to retain at least a part of the conditional handover information during a reestablishment procedure following a failure affecting a radio link of the user equipment (action 320).

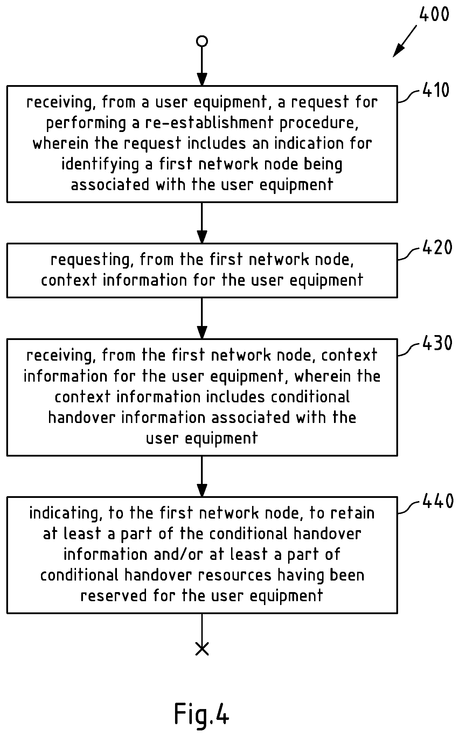

FIG. 4 shows an example embodiment 400 of the method according to the third exemplary aspect. Method 400 may for example be performed by the second network node according to the third exemplary aspect. First, a request for performing a re-establishment procedure may be received from a user equipment, wherein the request includes an indication for identifying a first network node being associated with the user equipment (action 410). Further, context information for the user equipment may be requested from the first network node (action 420). Further, context information for the user equipment may be received from the first network node, wherein the context information may include conditional handover information associated with the user equipment (action 430). Further, it may be indicated, to the first network node, to retain at least a part of the conditional handover information and/or at least a part of conditional handover resources having been reserved for the user equipment (action 440).

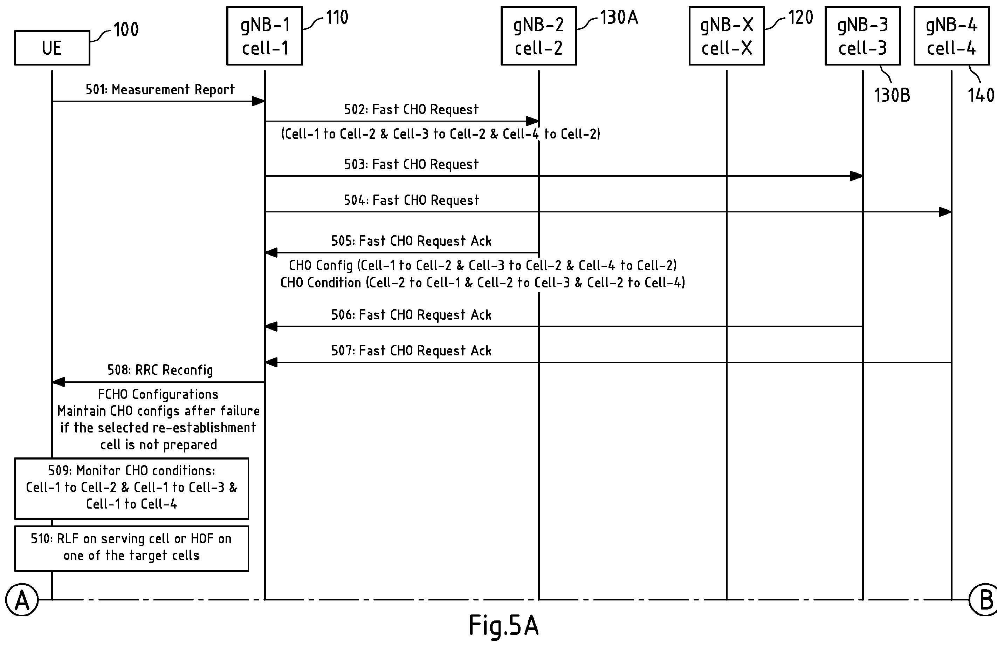

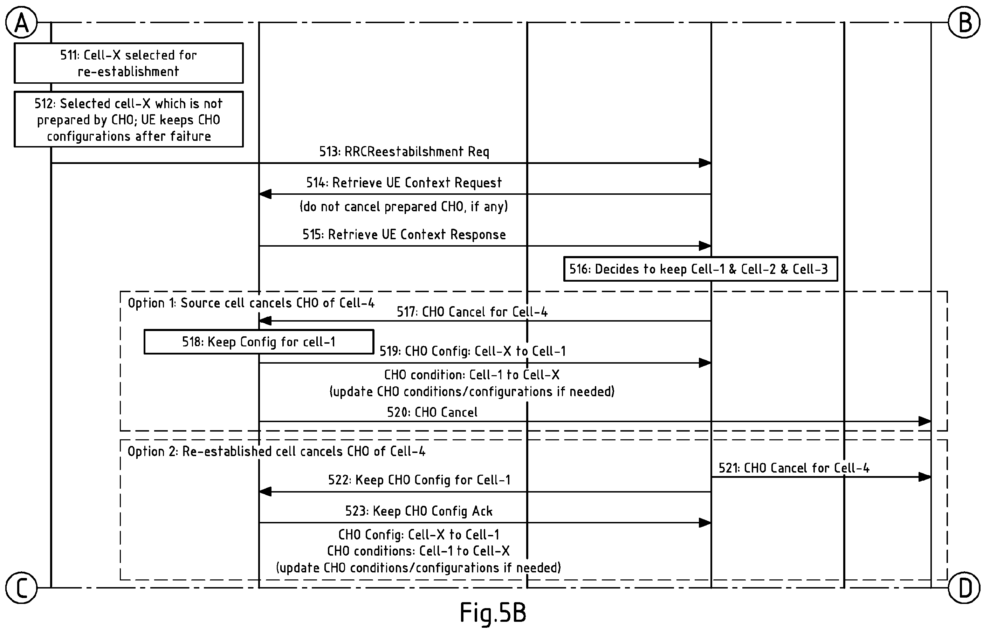

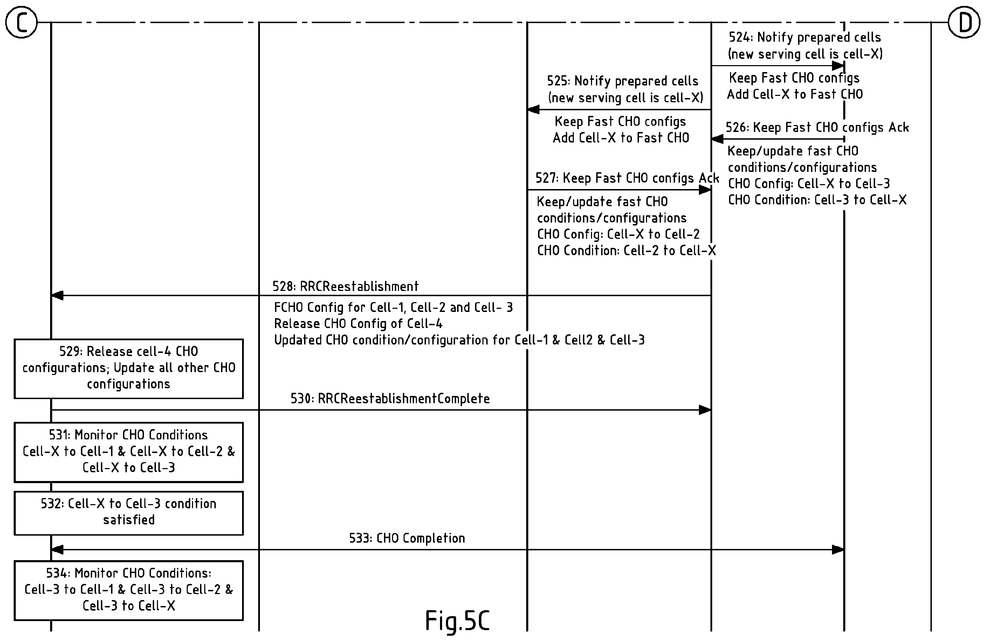

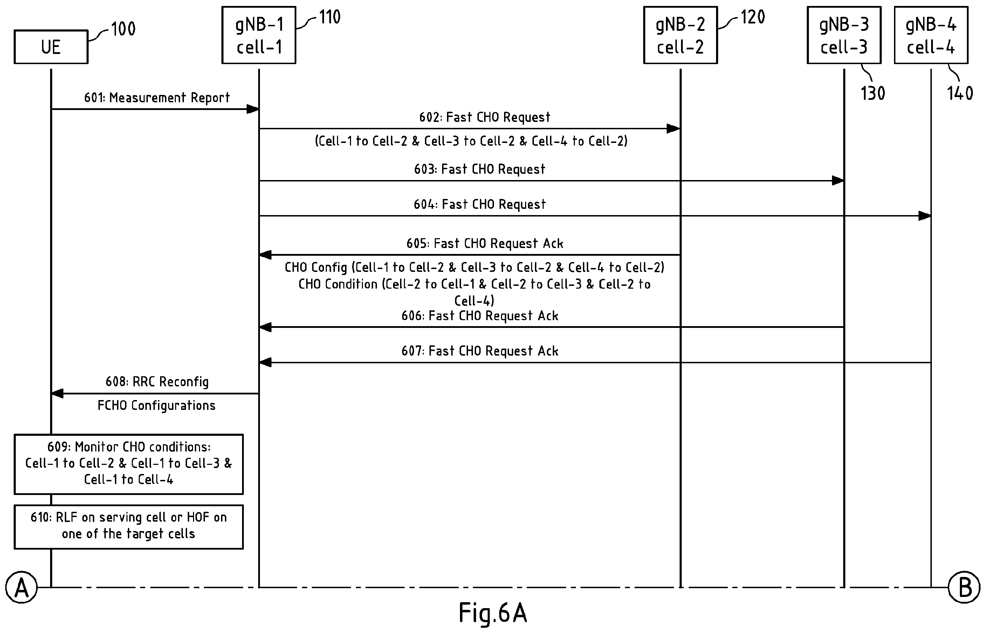

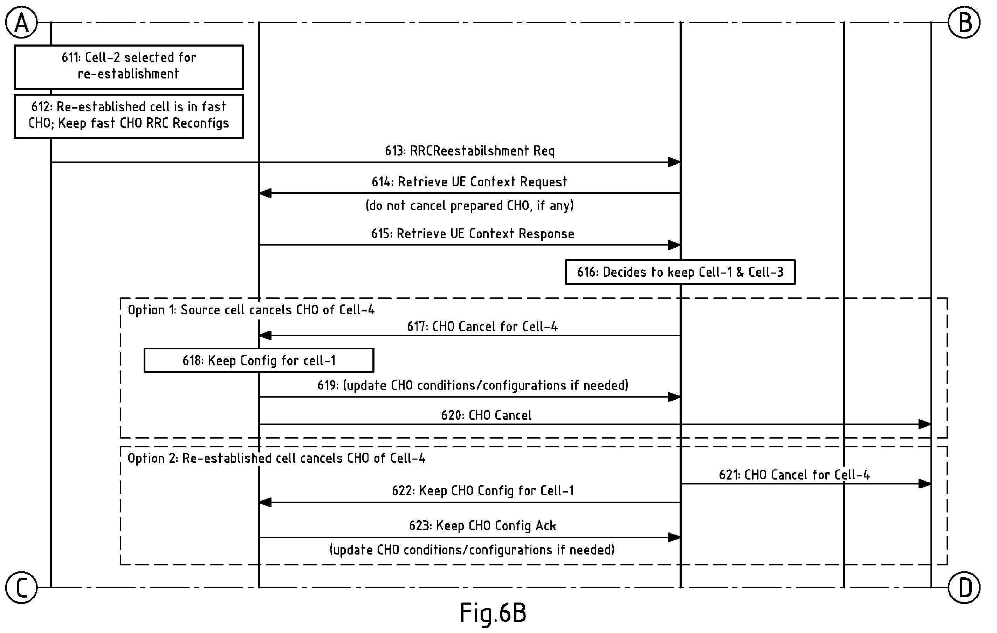

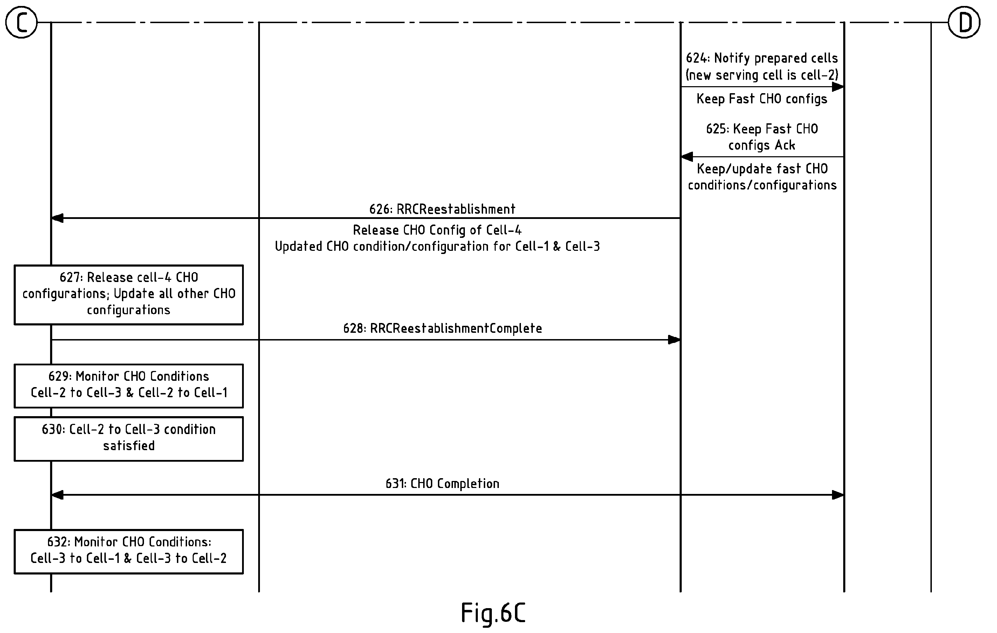

In the following, before illustrating the two examples of signaling flow charts of FIGS. 5A-5C and FIGS. 6A-6C, the signaling procedure for a CHO of a UE from a first gNB/cell (gNB-1/cell-1) to a second gNB/cell (gNB-2/cell-2) is described below. It is to be understood that this description is for illustrative purposes only and not meant to be limiting in any way.

Before the CHO, the UE may be served by cell-1 in gNB-1. First, the UE may send a measurement report to its serving cell (i.e. cell-1) to initiate the CHO preparation of target cell-2 in gNB-2. Cell-1 may then prepare the target cell-2 by sending, to cell-2, a CHO request and by receiving, from cell-2, a CHO request acknowledge. Cell-1 may then send, to the UE, the CHO preparation along with the CHO execution condition with an RRC Reconfiguration message. User data may still be exchanged between the UE and cell-1 in gNB-1 after the RRC Reconfiguration message has been sent.

Once the CHO execution condition against the target cell-2 in target gNB-2 is met (or fulfilled), the UE detaches from its source cell-1, i.e., stops transmission/reception (TX/RX) to/from the source cell-1 in source gNB-1.

The UE may then initiate a random access (or random-access channel, RACH) procedure towards the target cell-2 by sending a PRACH Preamble. In response to the PRACH Preamble, the target cell-2 may send a RACH Response to the UE. In response to the RACH Response from the target cell-2, the UE may send an RRC Reconfiguration Complete to the target cell-2. Once the random access procedure is completed successfully, the target cell-2 may notify the source cell-1 about the successful completion of the handover procedure by sending a Handover Success indication.

Upon receiving the Handover Success indication from the target cell-2, the source cell-1 may initiate the data forwarding (and path switch) to the target cell-2. Once the data forwarding (and path switch) procedure is completed, the UE may continue its data transmission/reception with the network, thereby completing the CHO of the UE from gNB-1/cell-1 to gNB-2/cell-2.

As it has been described above, a single CHO command may be used for more than one CHO such as to allow for at least two consecutive CHOs based on the single CHO command. By using a single CHO command allowing for at least two consecutive CHOs, a UE to which the CHO command is provided may execute two or more CHOs consecutively without having to wait for further CHO configuration(s) to be provided by the wireless communication network after each handover. Such consecutive or fast CHO (FCHO) may enable fast cell switching (FCS) for a UE between cells having been prepared for FCHO.

Before illustrating the two examples of signaling flow charts of FIGS. 5A-5C and FIGS. 6A-6C, the signaling procedure for an FCHO of a UE which is handed over first from a first gNB/cell (gNB-1/cell-1) to a second gNB/cell (gNB-2/cell-2) and then to a third gNB/cell (gNB-3/cell-3) is described below. It is to be understood that this description is for illustrative purposes only and not meant to be limiting in any way.

First, the UE may send a measurement report to its serving cell-1.

Then, cell-1 may initiate the consecutive CHO (Fast CHO) preparation: one preparation from cell-1 to cell-2 and another preparation from cell-3 to cell-2 which is a provisional CHO preparation, i.e. in case the UE hands over to cell-3, it may perform a sub-sequent handover from cell-3 to cell-2. To this end, cell-1 may send an FCHO request to cell-2.

Similarly, cell-1 may initiate the CHO preparation for a handover from cell-1 to cell-3 and from cell-2 to cell-3 where the latter one is a provisional preparation. To this end, cell-1 may send an FCHO request to cell-3.

Cell-2 may then acknowledge the CHO preparations that are requested by cell-1. To this end, cell-2 may send a FCHO request acknowledgement to cell-1 which includes the CHO configurations from cell-1 to cell-2 and from cell-3 to cell-2. Cell-2 may also provide to cell-1 the CHO condition for the provisional CHO preparation from cell-2 to cell-1 and cell-2 to cell-3 (to be monitored by the UE if the UE handovers to cell-2).

Similarly, cell-3 may acknowledge the CHO preparations that are requested by cell-1 by providing, to cell-1, the CHO configurations from cell-1 to cell-3 and from cell-2 to cell-3 as well as the CHO conditions for provisional CHO preparations from cell-3 to cell-1 and cell-3 to cell-2.

Cell-1 may then send an RRC Reconfiguration message to the UE that includes the CHO preparations and the CHO conditions that have been obtained previously.

Once the UE receives the RRC Reconfiguration, the UE may monitor the CHO execution conditions: cell-1 to cell-2 and cell-1 to cell-3 as the current serving cell is cell-1 whereas cell-2 and cell-3 are target cells. The rest of the conditions and configurations will be suspended until the UE handovers to another cell.

Now if the CHO execution condition from cell-1 to cell-2 is satisfied the UE may initiate the CHO towards target cell-2.

The UE may then execute the handover towards target cell-2 using the configurations provided previously and may complete the handover procedure.

The UE may then start monitoring the CHO execution conditions: cell-2 to cell-1 and cell-2 to cell-3 as cell-2 is the new serving cell whereas cell-1 and cell-3 are target cells (without further RRC Reconfiguration from the network as the UE has already acquired all the necessary CHO configurations).

Similarly as before, if the CHO execution condition towards target cell-3 is satisfied the UE may handover from cell-2 to cell-3 using the RRC Reconfiguration provided previously.

Once the CHO towards target cell-3 is completed, the UE may start monitoring the CHO execution condition from cell-3 to cell-1 and from cell-3 to cell-2.

Now turning to FIGS. 5A-5C (exemplary embodiment of the disclosure), in the scenario of FIGS. 5A-5C a UE 100 (an example of a user equipment according to the first exemplary aspect) is served by a gNB-1 (an example of a first network node according to the second exemplary aspect) which is in communication with a gNB-2, a gNB-3 and a gNB-4 (examples of further network nodes). As part of the signaling, the gNBs-1, -2, - 3 and -4 will be prepared for FCHO for UE 100 such that UE 100 may perform fast CHO between these gNBs. Further, gNB-1 is in communication with a gNB-X (an example of a second network node according to the third exemplary aspect) which will not be prepared for FCHO for UE 100 and to which UE 100 re-establishes to after experiencing a failure. Each gNB serves a corresponding cell (gNB-1 serves cell-1, gNB-2 serves cell-2 etc.).

In the following, the signaling flow will be illustrated with reference to the respective cells. However, it is to be understood that any message, signaling or action described in the following with reference to a cell may equally be understood as referring to a message, signaling or action towards a gNB serving that cell:
Step 501: the UE sends a measurement report to its serving cell, i.e., cell-1.
Steps 502, 503, 504: the serving cell-1 decides to initiate the fast CHO preparation of neighbor cells, i.e., cell-2, cell-3 and cell-4. Then, cell-1 sends the fast CHO request to cell-2, cell-3 and cell-4. In each request, cell-1 requests the provisional CHO preparation of the cells for fast CHO, i.e., cell-1 requests HO preparation for a handover from cell-1, cell-3 or cell-4 to cell-2 when fast CHO request is sent to cell-2 (see message 502).
Steps 505, 506, 507: Neighbor cells send the CHO configurations and CHO conditions to cell-1 that are requested in the fast CHO request message.
Step 508: The serving cell-1 sends the RRC Reconfiguration to the UE that includes the fast CHO configurations needed for FCS between prepared cells (an example of transmitting conditional handover information to a user equipment). The network indicates to the UE to keep the CHO configurations if the selected cell for re-establishment is not a prepared cell after a failure (an example of indicating, to the user equipment, to retain at least a part of the conditional handover information, in particular if a network node, for which no conditional handover information were included in the conditional handover information having been transmitted by the first network node to the user equipment, is selected by the user equipment for the re-establishment procedure).
Step 509: The UE monitors the CHO execution conditions from serving cell-1 to neighbor cells, i.e., cell-2, cell-3 and cell-4.
Step 510: The UE detects a RLF or a HOF (an example of detecting a failure affecting a radio link of the user equipment) and initiates a re-establishment procedure on a cell that is suitable for connection.
Step 511: The UE selects cell-X for re-establishment which was not one of the prepared cells in fast CHO preparation.
Step 512: The UE identifies that the selected cell-X is not one of the prepared cells (an example of determining that, for a network node having been selected by the user equipment for the re-establishment procedure, no conditional handover information were included in the conditional handover information having been received by the user equipment from the first network node). The UE keeps the fast CHO RRC Reconfigurations that are provided in step 508 (an example of retaining at least a part of the conditional handover information, in particular based on the determining that cell-X is non-prepared).
Step 513: UE initiates the re-establishment procedure towards selected cell-X (an example of transmitting, by the user equipment, a request for performing a re-establishment procedure to a second network node).
Step 514: Cell-X requests the UE context from cell-1 (an example of requesting, from the first network node, context information for the user equipment) and indicates that cell-1 should not release any CHO preparations for that UE if there are any (an example of indicating, to the first network node, to retain at least a part of the conditional handover information and/or at least a part of conditional handover resources having been reserved for the user equipment).
Step 515: Cell-X receives the UE context from the previous serving cell-1 that includes the previous fast CHO preparations of that UE (an example of receiving, from the first network node, context information for the user equipment, wherein the context information includes conditional handover information associated with the user equipment).
Step 516: Re-established cell-X decides on which fast CHO preparations to be kept and which ones to be released for that UE (an example of selecting respective parts of the conditional handover information and/or of conditional handover resources having been reserved for the user equipment to be retained or to be released). In that example, cell-X decides to keep the fast CHO preparations of cell-1, cell-2 and cell-3 whereas it decides to release the fast CHO preparation of cell-4.

In option 1 (steps 517, 518, 519, 520), the source cell-1 which has initiated the fast CHO preparations cancels the fast CHO preparations of cell-4 which the new cell X has decided to release:
Step 517: In that case, cell-X sends a request to source cell-1 for cancelling the fast CHO preparation of cell-4 (an example of indicating, to the first network node, the parts of the conditional handover information and/or of the conditional handover resources that have been selected to be released).
Step 518: This is an implicit indication to cell-1 to keep the fast CHO preparation of cell-1 (an example of receiving, from a second network node, an indication to retain at least a part of conditional handover information and/or resources) and hence cell-1 retains the fast CHO preparation of itself for that UE (an example of retaining at least a part of conditional handover information associated with the user equipment and/or retaining at least a part of conditional handover resources having been reserved for the user equipment).
Step 519: Cell-1 sends the CHO configuration for a handover from cell-X to cell-1 and the CHO condition from cell-1 to cell-X (an example of transmitting, to a second network node, additional conditional handover information associated with the first network node and with the second network node). Cell-1 can also use this procedure to update the previously provided fast CHO preparation configurations that were given to the UE in step 508 (an example of transmitting, to a second network node, updated conditional handover information for updating at least a part of the conditional handover information having been transmitted by the first network node to the user equipment).
Step 520: Cell-1 cancels the fast CHO preparation of cell-4 and hence cell-4 will release the fast CHO preparations for that UE.

In option 2 (steps 521, 522, 523), cell-X to which the UE re-establishes to cancels the fast CHO preparations of cell-4:
Step 521: Cell-X sends the CHO cancel message to cell-4 directly to exclude cell-4 from fast CHO preparations (an example of indicating, to at least one further network node associated with the parts of the conditional handover information and/or of the conditional handover resources that have been selected to be released, to release conditional handover information and/or to release conditional handover resources). Cell-4 releases the fast CHO preparations and relative resource reservations, accordingly.
Step 522: Cell-X indicates to cell-1 that it decided to keep the fast CHO preparation of cell-1.
Step 523: Cell-1 acknowledges the decision of cell-X on keeping the fast CHO preparation of cell-1. Cell-1 also sends the CHO configuration for a handover from cell-X to cell-1 and the CHO condition for a handover from cell-1 to cell-X (an example of transmitting, to a second network node, additional conditional handover information associated with the first network node and with the second network node). Cell-1 can use this procedure to update the previous fast CHO preparation configurations that were given to the UE in step 508 (an example of transmitting, to a second network node, updated conditional handover information for updating at least a part of the conditional handover information having been transmitted by the first network node to the user equipment).

Steps 524, 525: Cell-X notifies the neighbor cells which were included in the fast CHO preparation and which the cell-X has decided to keep about the identity of the new serving cell (cell X in this case) (an example of indicating, to at least one further network node associated with the user equipment and with the first network node that the user equipment is now served by the second network node). With this procedure, cell-X also sends the request to keep the fast CHO preparations for that UE (an example of indicating, to at least one further network node associated with the user equipment and with the first network node to retain at least a part of conditional handover information associated with the user equipment and/or conditional handover resources having been reserved for the user equipment). Cell-X also sends the fast CHO preparation request to be included in the fast CHO preparation that was handled before from step 502 to step 507, i.e., a request for the target node to provide a CHO configuration to Cell X and a CHO condition that will be evaluated for deciding on the handover execution towards cell-X (an example of requesting, from at least one further network node associated with the user equipment and with the first network node, additional conditional handover information, wherein the additional conditional handover information is associated with the second network node and the at least one further network node).

Steps 526, 527: Cell-2 and Cell-3 acknowledge that they will keep the previous fast CHO preparations. They will also provide necessary CHO configurations and conditions that are needed for cell-X to be included in the previous fast CHO preparation. The previously prepared cells, i.e., cell-2 and cell-3, also use this procedure to update the conditions/configurations of the previous fast CHO preparations.

Step 528: Re-established cell-X sends the RRC re-establishment message to the UE to update the conditional reconfigurations that the UE retained in step 512 (an example of transmitting, to the user equipment, renewed conditional handover information). The message is used to update the previous CHO configuration, i.e., notify UE about cancelled CHO preparations (which are to be released by the UE) (an example of conditional handover release information) and updated CHO configurations and conditions (an example of updated conditional handover information) for the cells where the cell-X decided to keep them in the fast CHO preparations. Cell-X also includes the CHO configurations and conditions that are needed to include cell-X in the previous fast CHO preparation (an example of additional conditional handover information).

Step 529: The UE discards the fast CHO preparations related to cell-4 (an example of releasing at least a part of the conditional handover information having been received by the user equipment from the first network node) and updates the fast CHO preparation conditions/configurations that are indicated by cell-X (an example of updating at least a part of the conditional handover information having been received by the user equipment from the first network node and/or of storing additional conditional handover information associated with at least one additional network node).

Step 530: The UE sends the RRC Reestablishment Complete message to cell-X to acknowledge the message from step 528.

Steps 531-533: After successful re-establishment procedure, the UE starts to monitor the CHO execution conditions from cell-X towards the neighbor cells, i.e., cell-1, cell-2 and cell-3. Cell-3 satisfies the CHO execution condition and the UE handovers from cell-X to cell-3.

Step 534: The UE starts to monitor the CHO execution conditions from cell-3 to cell-1, cell-2 and cell-X after the successful completion of the handover from cell-X to cell-3 where the UE does not need RRC reconfiguration for CHO execution from cell-3 to cell-1, or cell-2 again (as it was given in message 508 and re-used).

Now turning to FIGS. 6A-6C (exemplary embodiment of the disclosure), in the scenario of FIGS. 6A-6C a UE 100 (an example of a user equipment according to the first exemplary aspect) is served by a gNB-1 (an example of a first network node according to the second exemplary aspect) which is in connection with a gNB-2 (an example of a second network node according to the third exemplary aspect) and with gNBs-3 and - 4 (examples of further network nodes). As part of the signaling, the gNBs-1, -2, -3 and -4 will be prepared for FCHO for UE 100 such that UE 100 may perform fast CHO between these gNBs. After experiencing a failure, UE 100 re-establishes to gNB-2. Each gNB serves a corresponding cell (gNB-1 serves cell-1, gNB-2 serves cell-2, gNB-3 serves cell-3 and gNB-4 serves cell-4).

In the following, the signaling flow will be illustrated with reference to the respective cells. However, it is to be understood that any message, signaling or action described in the following with reference to a cell may equally be understood as referring to a message, signaling or action towards a gNB serving that cell:
Steps 601 to 613: The steps will be same as steps 501 to 513 described in the scenario of FIGS. 5A-5C.
Step 614: As the re-established cell-2 is aware of the fast CHO preparations, it requests source cell-1 (which has previously initiated the fast CHO preparations) to retain the fast CHO preparations (an example of indicating, to the first network node, to retain at least a part of the conditional handover information and/or at least a part of conditional handover resources having been reserved for the user equipment).
Step 615: Source cell-1 sends the UE context to cell-2 for the UE that has experienced failure (an example of transmitting, by the first network node, context information for the user equipment to the second network node).
Step 616: Cell-2 decides to keep/release some of the fast CHO preparations for the UE that has experienced failure (an example of selecting respective parts of the conditional handover information and/or of conditional handover resources having been reserved for the user equipment to be retained or to be released).

In Option 1 (steps 617, 618, 619, 620), the source cell handles the cancellation of the fast CHO preparations that cell-2 decides to release:
Step 617: Cell-2 (to which the UE re-establishes to) indicates the cells whose fast CHO preparations shall be cancelled (an example of indicating, to the first network node, the parts of the conditional handover information and/or of the conditional handover resources that have been selected to be released). In this example, cell-2 wants to cancel the fast CHO preparations of cell 4 (exclude cell-4 from the fast CHO preparation).
Step 618: Step 617 will be an implicit statement from cell-2 to cell-1 that cell-2 wants to keep cell-1 fast CHO preparations (an example of receiving, from a second network node, an indication to retain at least a part of conditional handover information and/or resources). Hence, cell-1 decides to keep cell-1 fast CHO preparation (an example of retaining at least a part of conditional handover information associated with the user equipment and having been stored by the first network node and/or retaining at least a part of conditional handover resources having been reserved by the first network node for the user equipment).
Step 619: Cell-1 uses this procedure to update the cell-1 related fast CHO preparation configurations/conditions, if needed (an example of transmitting, to a second network node, updated conditional handover information for updating at least a part of the conditional handover information, wherein the updated conditional handover information is associated with the first network node).
Step 620: Cell-1 cancels the fast CHO preparation of cell-4 and hence cell-4 will release the fast CHO preparations for that UE.

In Option 2 (steps 621, 622, 623), the re-established cell-2 cancels the fast CHO preparations of cell-4:
Step 621: Re-established cell-2 cancels the fast CHO preparation of cell-4 that cell-2 decided to exclude from fast CHO preparation (an example of indicating, to at least one further network node associated with the parts of the conditional handover information and/or of the conditional handover resources that have been selected to be released, to release conditional handover information and/or to release conditional handover resources).
Step 622-623: Re-established cell-2 notifies source cell-1 about its decision on keeping the fast CHO preparations of cell-1 and cell-1 acknowledges this decision. Cell-1 also uses this procedure to update the fast CHO preparations of cell-1, i.e., the CHO configurations and conditions related to the fast CHO preparations of cell-1 (an example of transmitting, to a second network node, updated conditional handover information for updating at least a part of the conditional handover information, wherein the updated conditional handover information is associated with the first network node).

Step 624: Re-established cell-2 notifies the neighbor cells, (i.e., cell 3 that were included in fast CHO preparations in steps 602 to 608 and not cancelled after failure) about a serving cell change, i.e., the identifier of the new serving cell (an example of indicating, to at least one further network node associated with the user equipment and with the first network node that the user equipment is now served by the second network node).

Step 625: The notified cells, i.e., cell-3, acknowledge the retaining the fast CHO preparations (an example of retaining at least a part of conditional handover information associated with the user equipment and/or conditional handover resources having been reserved for the user equipment). Besides, the notified cells use this procedure to update the fast CHO configurations and conditions that are configured from step 602 to step 608.

Steps 626 to 632: The rest of the procedure is the same as described in the scenario of FIGS. 5A-5C, steps 528 to 534.

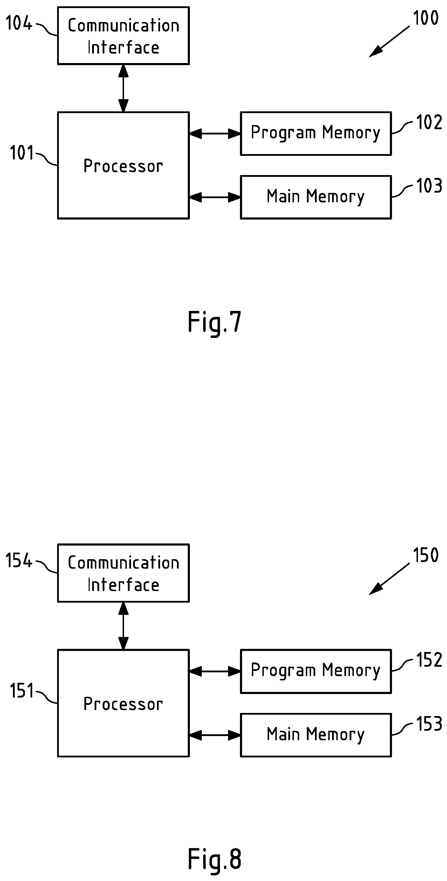

Now turning to FIG. 7, there is shown a block diagram of an example of a UE 100. For example, UE 100 may be one of a smartphone, a tablet computer, a notebook computer, a smart watch, a smart band, an IoT device or a vehicle or a part thereof.

UE 100 comprises a processor 101. Processor 101 may represent a single processor or two or more processors, which are for instance at least partially coupled, for instance via a bus. Processor 101 executes a program code stored in program memory 102 (for instance program code causing UE 100 in connection with a network node 150 to perform one or more of the example embodiments of a method according to the present disclosure or parts thereof, when executed on processor 101, and interfaces with a main memory 103. Program memory 102 may also contain an operating system for processor 101. Some or all of memories 102 and 103 may also be included into processor 101.

One of or both of a main memory and a program memory of a processor (e.g. program memory 102 and main memory 103) could be fixedly connected to the processor (e.g. processor 101) or at least partially removable from the processor, for instance in the form of a memory card or stick.

A program memory (e.g. program memory 102) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 103) may for instance be a volatile memory. It may for instance be a DRAM memory, to give non-limiting example. It may for instance be used as a working memory for processor 101 when executing an operating system, an application, a program, and/or the like.

Processor 101 further controls a communication interface 104 (e.g. radio interface) configured to receive and/or transmit data and/or information. For instance, communication interface 104 may be configured to transmit and/or receive radio signals from a network node, in particular as described herein. It is to be understood that any computer program code based processing required for receiving and/or evaluating radio signals may be stored in an own memory of communication interface 104 and executed by an own processor of communication interface 104 and/or it may be stored for example in memory 103 and executed for example by processor 101.

Communication interface 104 may in particular be configured to communicate according to a cellular communication system like a 2G/3G/4G/5G or future generation cellular communication system. User equipment 100 may use radio interface 104 to communicate with a network node.

For example, the communication interface 104 may further comprise a BLE and/or Bluetooth radio interface including a BLE transmitter, receiver or transceiver. For example, radio interface 104 may additionally or alternatively comprise a WLAN radio interface including at least a WLAN transmitter, receiver or transceiver.

The components 102 to 104 of user equipment 100 may for instance be connected with processor 101 by means of one or more serial and/or parallel busses.

It is to be understood that user equipment 100 may comprise various other components. For example, user equipment 100 may optionally comprise a user interface (e.g. a touch-sensitive display, a keyboard, a touchpad, a display, etc.).

FIG. 8 shows a block diagram of an example of a network node, such as a base station or gNB. For instance, network node 150 may be configured for scheduling and/or transmitting signals to the UE 100, as described above.

Network node 150 comprises a processor 151. Processor 151 may represent a single processor or two or more processors, which are for instance at least partially coupled, for instance via a bus. Processor 151 executes a program code stored in program memory 152 (for instance program code causing network node 150 to perform alone or together with user equipment 100 example embodiments according to the present disclosure or parts thereof), and interfaces with a main memory 153.

Program memory 152 may also comprise an operating system for processor 151. Some or all of memories 152 and 153 may also be included into processor 151.

Moreover, processor 151 controls a communication interface 154 which is for example configured to communicate according to a cellular communication system like a 2G/3G/4G/5G cellular communication system. Communication interface 154 of apparatus 150 may be realized by radio heads for instance and may be provided for communication between network node and user equipment.

The components 152 to 154 of apparatus 150 may for instance be connected with processor 151 by means of one or more serial and/or parallel busses.

It is to be understood that apparatuses 100, 150 may comprise various other components.

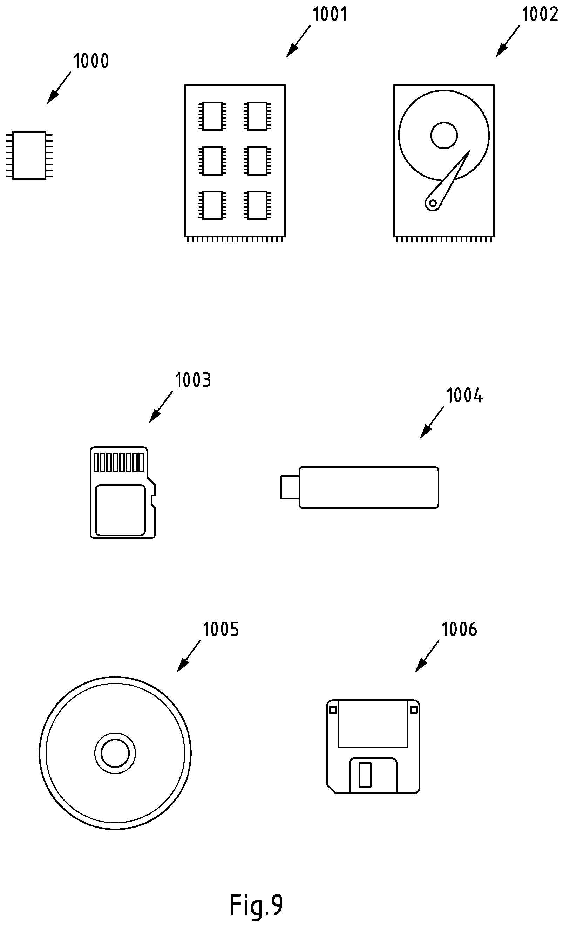

FIG. 9 shows a schematic illustration of examples of tangible and non-transitory computer-readable storage media according to the present disclosure that may for instance be used to implement memory 102 of FIG. 7 or memory 152 of FIG. 8. To this end, FIG. 9 displays a flash memory 1000, which may for instance be soldered or bonded to a printed circuit board, a solid-state drive 1001 comprising a plurality of memory chips (e.g. Flash memory chips), a magnetic hard drive 1002, a Secure Digital (SD) card 1003, a Universal Serial Bus (USB) memory stick 1004, an optical storage medium 1005 (such as for instance a CD-ROM or DVD) and a magnetic storage medium 1006.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' may refer to any of the following:
(a) hardware-only circuit implementations (such as implementations in only analog and/or digital circuitry)
(b) combinations of circuits and software (and/or firmware), such as:
   (i) to a combination of processor(s) or
   (ii) to sections of processor(s)/software (including digital signal processor(s)), software, and
   memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 101 and 151 of FIGS. 7 and 8, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The wording "A, or B, or C, or a combination thereof" or "at least one of A, B and C" or "at least one of A, B or C" or "A, B, and/or C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular example embodiment may be used with any aspect of the present disclosure on its own or in combination with any feature presented for the same or another particular example embodiment and/or in combination with any other feature not mentioned. It will further be understood that any feature presented for an example embodiment in a particular category may also be used in a corresponding manner in an example embodiment of any other category.

## Claims

1. A user equipment (100) comprising:
at least one processor; and
at least one memory storing instructions that, when executed by the at least one processor, cause the user equipment at least to perform:
- receiving (508) conditional handover information from a first network node (110); and
- retaining (512) at least a part of the conditional handover information during a re-establishment procedure following a failure (510) affecting a radio link of the user equipment;
- receiving (528), from a second network node (120), renewed conditional handover information during the re-establishment procedure.

2. The user equipment of claim 1, wherein the instructions, when executed by the at least one processor, further cause the user equipment to perform:
- receiving, from the first network node, an indication to retain at least a part of the conditional handover information during a re-establishment procedure following a failure affecting a radio link of the user equipment, in particular wherein the indication is received in conjunction with the conditional handover information.

3. The user equipment of any of claims 1 or 2, wherein the instructions, when executed by the at least one processor, further cause the user equipment to perform:
- detecting a failure affecting a radio link of the user equipment; and
- based on detecting the failure, retaining the at least a part of the conditional handover information.

4. The user equipment of any of claims 1 to 3, wherein the instructions, when executed by the at least one processor, further cause the user equipment to perform:
- determining that, for a network node having been selected by the user equipment for the re-establishment procedure, no conditional handover information were included in the conditional handover information having been received by the user equipment from the first network node; and
- based on the determining, retaining the at least a part of the conditional handover information.

5. The user equipment of claim 4, wherein the renewed conditional handover information comprises:
- updated conditional handover information for updating at least a part of the conditional handover information having been received by the user equipment from the first network node;
- additional conditional handover information, wherein the additional conditional handover information is associated with at least one additional network node for which no conditional handover information were included in the conditional handover information having been received by the user equipment from the first network node, in particular wherein the at least one additional network node comprises or corresponds to the second network node; and/or
- conditional handover release information indicating that at least a part of the conditional handover information having been received by the user equipment from the first network node shall be released.

6. The user equipment of any of claims 4 or 5, wherein the instructions, when executed by the at least one processor, further cause the user equipment to perform, based on the renewed conditional handover information, in particular during the re-establishment procedure:
- updating at least a part of the conditional handover information having been received by the user equipment from the first network node;
- releasing at least a part of the conditional handover information having been received by the user equipment from the first network node; and/or
- storing additional conditional handover information associated with at least one additional network node for which no conditional handover information were included in the conditional handover information having been received by the user equipment from the first network node, in particular wherein the at least one additional network node comprises or corresponds to the second network node.

7. A first network node (110) comprising:
at least one processor; and
at least one memory storing instructions that, when executed by the at least one processor, cause the first network node at least to perform:
- transmitting (508) conditional handover information to a user equipment (100); and
- indicating (508), to the user equipment, to retain at least a part of the conditional handover information during a re-establishment procedure following a failure (510) affecting a radio link of the user equipment.

8. The first network node of claim 7, wherein the indication to retain at least a part of the conditional handover information is transmitted either in conjunction with the conditional handover information or separately from the conditional handover information.

9. The first network node of any of claims 7 or 8, wherein the instructions, when executed by the at least one processor, further cause the first network node to perform:
- indicating, to the user equipment, to retain the at least a part of the conditional handover information if a network node, for which no conditional handover information were included in the conditional handover information having been transmitted by the first network node to the user equipment, is selected by the user equipment for the re-establishment procedure.

10. The first network node of any of claims 7 to 9, wherein the instructions, when executed by the at least one processor, further cause the first network node to perform:
- retaining at least a part of conditional handover information associated with the user equipment and having been stored by the first network node; and/or
- retaining at least a part of conditional handover resources having been reserved by the first network node for the user equipment.

11. The first network node of claim 10, wherein the instructions, when executed by the at least one processor, further cause the first network node to perform:
- receiving, from a second network node, in particular during the re-establishment procedure, an indication to perform at least one of the steps of claim 10, in particular wherein the instructions, when executed by the at least one processor, cause the first network node to perform one or more of the steps of claim 10 based on receiving one or more corresponding indications from the second network node.

12. The first network node of any of claims 7 to 11, wherein the instructions, when executed by the at least one processor, further cause the first network node to transmit, to a second network node, in particular during the re-establishment procedure:
- updated conditional handover information for updating at least a part of the conditional handover information having been transmitted by the first network node to the user equipment and/or for updating at least a part of conditional handover information associated with the user equipment and having been stored by the second network node, in particular wherein the updated conditional handover information is associated with the first network node; and/or
- additional conditional handover information associated with at least one additional network node for which no conditional handover information were included in the conditional handover information having been transmitted by the first network node to the user equipment, in particular wherein the additional conditional handover information is associated with the first network node and with the second network node.

13. A second network node (120) comprising:
at least one processor; and
at least one memory storing instructions that, when executed by the at least one processor, cause the second network node at least to perform:
- receiving (513), from a user equipment (100), a request for performing a re-establishment procedure, wherein the request includes an indication for identifying a first network node (110) being associated with the user equipment;
- requesting (514), from the first network node, context information for the user equipment;
- receiving (515), from the first network node, context information for the user equipment, wherein the context information includes conditional handover information associated with the user equipment; and
- indicating (522), to the first network node, to retain at least a part of the conditional handover information and/or at least a part of conditional handover resources having been reserved for the user equipment.

14. The second network node of claim 13, wherein the conditional handover information received by the second network node as part of the context information does not include conditional handover information for the second network node.

15. The second network node of any of claims 13 or 14, wherein the instructions, when executed by the at least one processor, further cause the second network node to perform:
- selecting respective parts of the conditional handover information and/or of conditional handover resources having been reserved for the user equipment to be retained or to be released.

16. The second network node of claim 15, wherein the instructions, when executed by the at least one processor, further cause the second network node to perform:
- indicating, to the first network node, the parts of the conditional handover information and/or of the conditional handover resources that have been selected to be released.

17. The second network node of any of claims 15 or 16, wherein the instructions, when executed by the at least one processor, further cause the second network node to perform:
- indicating, to at least one further network node associated with the parts of the conditional handover information and/or of the conditional handover resources that have been selected to be released, to release conditional handover information associated with the user equipment and having been stored by the at least one further network node and/or to release conditional handover resources having been reserved by the at least one further network node for the user equipment.

18. The second network node of any of claims 13 to 17, wherein the instructions, when executed by the at least one processor, further cause the second network node to receive, from the first network node:
- updated conditional handover information for updating at least a part of conditional handover information having been transmitted by the first network node to the user equipment and/or for updating at least a part of the conditional handover information having been received by the second network node as part of the context information, in particular wherein the updated conditional handover information is associated with the first network node; and/or
- additional conditional handover information associated with at least one additional network node for which no conditional handover information were included in conditional handover information having been transmitted by the first network node to the user equipment, in particular wherein the additional conditional handover information is associated with the first network node and with the second network node.

19. The second network node of any of claims 13 to 18, wherein the instructions, when executed by the at least one processor, further cause the second network node to indicate, to at least one further network node associated with the user equipment and/or with the first network node:
- that the user equipment is now served by the second network node;
- to retain at least a part of conditional handover information associated with the user equipment and having been stored by the at least one further network node; and/or
- to retain at least a part of conditional handover resources having been reserved by the at least one further network node for the user equipment.

20. The second network node of any of claims 13 to 19, wherein the instructions, when executed by the at least one processor, further cause the second network node to perform:
- requesting, from at least one further network node associated with the user equipment and/or with the first network node, additional conditional handover information, in particular wherein the additional conditional handover information is associated with the second network node and the at least one further network node.

21. The second network node of any of claims 13 to 20, wherein the instructions, when executed by the at least one processor, further cause the second network node to perform:
- transmitting, to the user equipment, renewed conditional handover information.

22. The second network node of claim 21, wherein the instructions, when executed by the at least one processor, further cause the second network node to indicate, to the user equipment, to perform, based on the renewed conditional handover information:
- updating at least a part of conditional handover information having been received by the user equipment from the first network node;
- releasing at least a part of conditional handover information having been received by the user equipment from the first network node; and/or
- storing additional conditional handover information associated with at least one additional network node for which no conditional handover information were included in conditional handover information having been received by the user equipment from the first network node, in particular wherein the at least one additional network node comprises or corresponds to the second network node.

23. The second network node of any of claims 13 to 22, wherein the instructions, when executed by the at least one processor, further cause the second network node to perform one or more of the steps of claims 13 to 22
- based on receiving the request for performing a re-establishment procedure;
- as part of or during a re-establishment procedure performed based on receiving the request;
- before a re-establishment message transmitted based on receiving the request is received; and/or
- before a re-establishment procedure performed based on receiving the request has been completed.

24. A method, performed by a user equipment, the method comprising:
- receiving conditional handover information from a first network node; and
- retaining at least a part of the conditional handover information during a re-establishment procedure following a failure affecting a radio link of the user equipment;
said method being **characterized by**:
- receiving, from a second network node, renewed conditional handover information during the re-establishment procedure.

25. A method, performed by a first network node, the method comprising:
- transmitting conditional handover information to a user equipment;
said method being **characterized by**:
- indicating, to the user equipment, to retain at least a part of the conditional handover information during a re-establishment procedure following a failure affecting a radio link of the user equipment.

26. A method, performed by a second network node, the method comprising:
- receiving, from a user equipment, a request for performing a re-establishment procedure, wherein the request includes an indication for identifying a first network node being associated with the user equipment;
- requesting, from the first network node, context information for the user equipment;
said method being **characterized by**:
- receiving, from the first network node, context information for the user equipment, wherein the context information includes conditional handover information associated with the user equipment; and
- indicating, to the first network node, to retain at least a part of the conditional handover information and/or at least a part of conditional handover resources having been reserved for the user equipment.

27. A computer program comprising instructions, which, when executed by a user equipment, cause the user equipment to perform the method of claim 24; or a computer program comprising instructions which, when executed by a first network node, cause said first network node to perform the method of claim 25; or a computer program comprising instructions which, when executed by a second network node, cause said second network node to perform the method of claim 26.

28. A computer-readable storage medium having stored thereon the computer program of claim 27.

## Patentansprüche

1. Teilnehmereinrichtung (100), die Folgendes umfasst:
mindestens einen Prozessor; und
mindestens einen Speicher, in dem Anweisungen gespeichert sind, die, wenn sie von dem mindestens einen Prozessor ausgeführt werden, die Teilnehmereinrichtung zu veranlassen, mindestens Folgendes durchzuführen:
- Empfangen (508) von Bedingte-Übergabe-Informationen von einem ersten Netzwerkknoten (110); und
- Halten (512) von mindestens einem Teil der Bedingte-Übergabe-Informationen während einer Wiederaufbauprozedur nach einem Fehler (510), der eine Funkverbindung der Teilnehmereinrichtung beeinträchtigt;
- Empfangen (528) von erneuerten Bedingte-Übergabe-Informationen von einem zweiten Netzwerkknoten (120) während der Wiederaufbauprozedur.

2. Teilnehmereinrichtung nach Anspruch 1, wobei die Anweisungen, wenn sie von dem mindestens einen Prozessor ausgeführt werden, die Teilnehmereinrichtung ferner veranlassen, Folgendes durchzuführen:
- Empfangen einer Anzeige zum Halten von mindestens einem Teil der Bedingte-Übergabe-Informationen während der Wiederaufbauprozedur nach einem Fehler, der eine Funkverbindung der Teilnehmereinrichtung beeinträchtigt, vom ersten Netzwerkknoten, insbesondere wobei die Anzeige zusammen mit den Bedingte-Übergabe-Informationen empfangen wird.

3. Teilnehmereinrichtung nach einem der Ansprüche 1 oder 2, wobei die Anweisungen, wenn sie von dem mindestens einen Prozessor ausgeführt werden, die Teilnehmereinrichtung ferner veranlassen, Folgendes durchzuführen:
- Detektieren eines Fehlers, der eine Funkverbindung der Teilnehmereinrichtung beeinträchtigt; und
- Halten von dem mindestens einen Teil der Bedingte-Übergabe-Informationen auf Basis des Detektierens des Fehlers.

4. Teilnehmereinrichtung nach einem der Ansprüche 1 bis 3, wobei die Anweisungen, wenn sie von dem mindestens einen Prozessor ausgeführt werden, die Teilnehmereinrichtung ferner veranlassen, Folgendes durchzuführen:
- Bestimmen für einen Netzwerkknoten, der von der Teilnehmereinrichtung für die Wiederaufbauprozedur ausgewählt wurde, dass in den Bedingte-Übergabe-Informationen, die von der Teilnehmereinrichtung vom ersten Netzwerkknoten empfangen wurden, keine Bedingte-Übergabe-Informationen beinhaltet sind; und
- Halten von dem mindestens einen Teil der Bedingte-Übergabe-Informationen auf Basis des Bestimmens.

5. Teilnehmereinrichtung nach Anspruch 4, wobei die erneuerten Bedingte-Übergabe-Informationen Folgendes umfassen:
- aktualisierte Bedingte-Übergabe-Informationen zum Aktualisieren von mindestens einem Teil der Bedingte-Übergabe-Informationen, die von der Teilnehmereinrichtung vom ersten Netzwerkknoten empfangen wurden;
- zusätzliche Bedingte-Übergabe-Informationen, wobei die zusätzlichen Bedingte-Übergabe-Informationen mit mindestens einem zusätzlichen Netzwerkknoten assoziiert sind, für den keine Bedingte-Übergabe-Informationen in den Bedingte-Übergabe-Informationen beinhaltet waren, die von der Teilnehmereinrichtung vom ersten Netzwerkknoten empfangen wurden, insbesondere wobei der mindestens eine zusätzliche Netzwerkknoten den zweiten Netzwerkknoten umfasst oder demselben entspricht; und/oder
- Bedingte-Übergabe-Freigabeinformationen, die anzeigen, dass mindestens ein Teil der Bedingte-Übergabe-Informationen, die von der Teilnehmereinrichtung vom ersten Netzwerkknoten empfangen wurden, freigegeben werden.

6. Teilnehmereinrichtung nach einem der Ansprüche 4 oder 5, wobei die Anweisungen, wenn sie von dem mindestens einen Prozessor ausgeführt werden, die Teilnehmereinrichtung ferner veranlassen, auf Basis der erneuerten Bedingte-Übergabe-Informationen insbesondere während der Wiederaufbauprozedur Folgendes durchzuführen:
- Aktualisieren von mindestens einem Teil der Bedingte-Übergabe-Informationen, die von der Teilnehmereinrichtung vom ersten Netzwerkknoten empfangen wurden;
- Freigeben von mindestens einem Teil der Bedingte-Übergabe-Informationen, die von der Teilnehmereinrichtung vom ersten Netzwerkknoten empfangen wurden; und/oder
- Speichern von zusätzlichen Bedingte-Übergabe-Informationen, die mit mindestens einem zusätzlichen Netzwerkknoten assoziiert sind, für den keine Bedingte-Übergabe-Informationen in den Bedingte-Übergabe-Informationen beinhaltet waren, die von der Teilnehmereinrichtung vom ersten Netzwerkknoten empfangen wurden, insbesondere wobei der mindestens eine zusätzliche Netzwerkknoten den zweiten Netzwerkknoten umfasst oder demselben entspricht.

7. Erster Netzwerkknoten (110), der Folgendes umfasst:
mindestens einen Prozessor; und
mindestens einen Speicher, in dem Anweisungen gespeichert sind, die, wenn sie von dem mindestens einen Prozessor ausgeführt werden, den ersten Netzwerkknoten veranlassen, mindestens Folgendes durchzuführen:
- Übertragen (508) von Bedingte-Übergabe-Informationen zu einer Teilnehmereinrichtung (100); und
- Anzeigen (508) für die Teilnehmereinrichtung, mindestens einen Teil der Bedingte-Übergabe-Informationen während einer Wiederaufbauprozedur nach einem Fehler (510), der eine Funkverbindung der Teilnehmereinrichtung beeinträchtigt, zu halten

8. Erster Netzwerkknoten nach Anspruch 7, wobei die Anzeige zum Halten von mindestens einem Teil der Bedingte-Übergabe-Informationen entweder zusammen mit den Bedingte-Übergabe-Informationen oder getrennt von den Bedingte-Übergabe-Informationen übertragen werden.

9. Erster Netzwerkknoten nach einem der Ansprüche 7 oder 8, wobei die Anweisungen, wenn sie von dem mindestens einen Prozessor ausgeführt werden, den ersten Netzwerkknoten ferner veranlassen, Folgendes durchzuführen:
- Anzeigen für die Teilnehmereinrichtung, den mindestens einen Teil der Bedingte-Übergabe-Informationen zu halten, wenn ein Netzwerkknoten von der Teilnehmereinrichtung für die Wiederaufbauprozedur ausgewählt wird, für den in den Bedingte-Übergabe-Informationen, die vom ersten Netzwerkknoten zur Teilnehmereinrichtung übertragen wurden, keine Bedingte-Übergabe-Informationen beinhaltet waren.

10. Erster Netzwerkknoten nach einem der Ansprüche 7 bis 9, wobei die Anweisungen, wenn sie von dem mindestens einen Prozessor ausgeführt werden, den ersten Netzwerkknoten ferner veranlassen, Folgendes durchzuführen:
- Halten von mindestens einem Teil von Bedingte-Übergabe-Informationen, die mit der Teilnehmereinrichtung assoziiert sind und vom ersten Netzwerkknoten gespeichert wurden; und/oder
- Halten von mindestens einem Teil von Ressourcen für eine bedingte Übergabe, die vom ersten Netzwerkknoten für die Teilnehmereinrichtung reserviert wurden.

11. Erster Netzwerkknoten nach Anspruch 10, wobei die Anweisungen, wenn sie von dem mindestens einen Prozessor ausgeführt werden, den ersten Netzwerkknoten ferner veranlassen, Folgendes durchzuführen:
- Empfangen einer Anzeige zum Durchführen von mindestens einem der Schritte von Anspruch 10, von einem zweiten Netzwerkknoten insbesondere während der Wiederaufbauprozedur, insbesondere wobei die Anweisungen, wenn sie von dem mindestens einen Prozessor ausgeführt werden, den ersten Netzwerkknoten veranlassen, auf Basis des Empfangens von einer oder mehreren entsprechenden Anzeigen vom zweiten Netzwerkknoten einen oder mehrere der Schritte von Anspruch 10 durchzuführen.

12. Erster Netzwerkknoten nach einem der Ansprüche 7 bis 11, wobei die Anweisungen, wenn sie von dem mindestens einen Prozessor ausgeführt werden, den ersten Netzwerkknoten ferner veranlassen, insbesondere während der Wiederaufbauprozedur Folgendes zu einem zweiten Netzwerkknoten zu übertragen:
- Aktualisierte Bedingte-Übergabe-Informationen zum Aktualisieren von mindestens einem Teil der Bedingte-Übergabe-Informationen, die vom ersten Netzwerkknoten zur Teilnehmereinrichtung übertragen wurden, und/oder zum Aktualisieren von mindestens einem Teil von Bedingte-Übergabe-Informationen, die mit der Teilnehmereinrichtung assoziiert sind und vom zweiten Netzwerkknoten gespeichert wurden, insbesondere wobei die aktualisierten Bedingte-Übergabe-Informationen mit dem ersten Netzwerkknoten assoziiert sind; und/oder
- zusätzliche Bedingte-Übergabe-Informationen, die mit mindestens einem zusätzlichen Netzwerkknoten assoziiert sind, für den keine Bedingte-Übergabe-Informationen in den Bedingte-Übergabe-Informationen beinhaltet waren, die vom ersten Netzwerkknoten zur Teilnehmereinrichtung übertragen wurden, insbesondere wobei die zusätzlichen Bedingte-Übergabe-Informationen mit dem ersten Netzwerkknoten und mit dem zweiten Netzwerkknoten assoziiert sind.

13. Zweiter Netzwerkknoten (120), der Folgendes umfasst:
mindestens einen Prozessor; und
mindestens einen Speicher, in dem Anweisungen gespeichert sind, die, wenn sie von dem mindestens einen Prozessor ausgeführt werden, den zweiten Netzwerkknoten mindestens veranlassen, Folgendes durchzuführen:
- Empfangen (513) einer Anforderung zum Durchführen einer Wiederaufbauprozedur von einer Teilnehmereinrichtung (100), wobei die Anforderung eine Anzeige zum Identifizieren eines ersten Netzwerkknotens (110) beinhaltet, der mit der Teilnehmereinrichtung assoziiert ist;
- Anfordern (514) von Kontextinformationen für die Teilnehmereinrichtung vom ersten Netzwerkknoten;
- Empfangen (515) von Kontextinformationen für die Teilnehmereinrichtung vom ersten Netzwerkknoten, wobei die Kontextinformationen Bedingte-Übergabe-Informationen beinhalten, die mit der Teilnehmereinrichtung assoziiert sind; und
- Anzeigen (522) für den ersten Netzwerkknoten, mindestens einen Teil der Bedingte-Übergabe-Informationen und/oder mindestens einen Teil von Ressourcen für eine bedingte Übergabe, die für die Teilnehmereinrichtung reserviert wurden, zu halten.

14. Zweiter Netzwerkknoten nach Anspruch 13, wobei die Bedingte-Übergabe-Informationen, die vom zweiten Netzwerkknoten als Teil der Kontextinformationen empfangen wurden, keine Bedingte-Übergabe-Informationen für den zweiten Netzwerkknoten beinhalten.

15. Zweiter Netzwerkknoten nach einem der Ansprüche 13 oder 14, wobei die Anweisungen, wenn sie von dem mindestens einen Prozessor ausgeführt werden, den zweiten Netzwerkknoten ferner veranlassen, Folgendes durchzuführen:
- Auswählen von jeweiligen Teilen der Bedingte-Übergabe-Informationen und/oder von Ressourcen für eine bedingte Übergabe, die für die Teilnehmereinrichtung reserviert wurden, die zu halten oder freizugeben sind.

16. Zweiter Netzwerkknoten nach Anspruch 15, wobei die Anweisungen, wenn sie von dem mindestens einen Prozessor ausgeführt werden, den zweiten Netzwerkknoten ferner veranlassen, Folgendes durchzuführen:
- Anzeigen der Teile der Bedingte-Übergabe-Informationen und/oder der Ressourcen für eine bedingte Übergabe, die zum Freigeben ausgewählt wurden, für den ersten Netzwerkknoten.

17. Zweiter Netzwerkknoten nach einem der Ansprüche 15 oder 16, wobei die Anweisungen, wenn sie von dem mindestens einen Prozessor ausgeführt werden, den zweiten Netzwerkknoten ferner veranlassen, Folgendes durchzuführen:
- Anzeigen für mindestens einen weiteren Netzwerkknoten, der mit den Teilen der Bedingte-Übergabe-Informationen und/oder den Ressourcen für eine bedingte Übergabe, die zum Freigeben ausgewählt wurden, assoziiert sind, Bedingte-Übergabe-Informationen, die mit der Teilnehmereinrichtung assoziiert sind und von dem mindestens einen weiteren Netzwerkknoten gespeichert wurden, freizugeben und/oder Ressourcen für eine bedingte Übergabe, die von dem mindestens einen weiteren Netzwerkknoten für die Teilnehmereinrichtung reserviert wurden, freizugeben.

18. Zweiter Netzwerkknoten nach einem der Ansprüche 13 bis 17, wobei die Anweisungen, wenn sie von dem mindestens einen Prozessor ausgeführt werden, den zweiten Netzwerkknoten ferner veranlassen, Folgendes vom ersten Netzwerkknoten zu empfangen:
- Aktualisierte Bedingte-Übergabe-Informationen zum Aktualisieren von mindestens einem Teil von Bedingte-Übergabe-Informationen, die vom ersten Netzwerkknoten zur Teilnehmereinrichtung übertragen wurden, und/oder zum Aktualisieren von mindestens einem Teil der Bedingte-Übergabe-Informationen, die vom zweiten Netzwerkknoten als Teil der Kontextinformationen empfangen wurden, insbesondere wobei die aktualisierten Bedingte-Übergabe-Informationen mit dem ersten Netzwerkknoten assoziiert ist; und/oder
- zusätzliche Bedingte-Übergabe-Informationen, die mit mindestens einem zusätzlichen Netzwerkknoten assoziiert sind, für den keine Bedingte-Übergabe-Informationen in Bedingte-Übergabe-Informationen beinhaltet waren, die vom ersten Netzwerkknoten zur Teilnehmereinrichtung übertragen wurden, insbesondere wobei die zusätzlichen Bedingte-Übergabe-Informationen mit dem ersten Netzwerkknoten und mit dem zweiten Netzwerkknoten assoziiert sind.

19. Zweiter Netzwerkknoten nach einem der Ansprüche 13 bis 18, wobei die Anweisungen, wenn sie von dem mindestens einen Prozessor ausgeführt werden, den zweiten Netzwerkknoten ferner veranlassen, dem mindestens einen weiteren Netzwerkknoten, der mit der Teilnehmereinrichtung und/oder mit dem ersten Netzwerkknoten assoziiert ist, Folgendes anzuzeigen:
- dass die Teilnehmereinrichtung jetzt vom zweiten Netzwerkknoten bedient wird;
- mindestens einen Teil von Bedingte-Übergabe-Informationen zu halten, die mit der Teilnehmereinrichtung assoziiert sind und von dem mindestens einen weiteren Netzwerkknoten gespeichert wurden; und/oder
- mindestens einen Teil von Ressourcen für eine bedingte Übergabe zu halten, die von dem mindestens einen weiteren Netzwerkknoten für die Teilnehmereinrichtung reserviert wurden.

20. Zweiter Netzwerkknoten nach einem der Ansprüche 13 bis 19, wobei die Anweisungen, wenn sie von dem mindestens einen Prozessor ausgeführt werden, den zweiten Netzwerkknoten ferner veranlassen, Folgendes durchzuführen:
- Anfordern von zusätzlichen Bedingte-Übergabe-Informationen von mindestens einem weiteren Netzwerkknoten, der mit der Teilnehmereinrichtung und/oder mit dem ersten Netzwerkknoten assoziiert ist, insbesondere wobei die zusätzlichen Bedingte-Übergabe-Informationen mit dem zweiten Netzwerkknoten und dem mindestens einen weiteren Netzwerkknoten assoziiert sind.

21. Zweiter Netzwerkknoten nach einem der Ansprüche 13 bis 20, wobei die Anweisungen, wenn sie von dem mindestens einen Prozessor ausgeführt werden, den zweiten Netzwerkknoten ferner veranlassen, Folgendes durchzuführen:
- Übertragen von erneuerten Bedingte-Übergabe-Informationen zur Teilnehmereinrichtung.

22. Zweiter Netzwerkknoten nach Anspruch 21, wobei die Anweisungen, wenn sie von dem mindestens einen Prozessor ausgeführt werden, den zweiten Netzwerkknoten ferner veranlassen, der Teilnehmereinrichtung anzuzeigen, auf Basis der erneuerten Bedingte-Übergabe-Informationen Folgendes durchzuführen:
- Aktualisieren von mindestens einem Teil von Bedingte-Übergabe-Informationen, die von der Teilnehmereinrichtung vom ersten Netzwerkknoten empfangen wurden;
- Freigeben von mindestens einem Teil von Bedingte-Übergabe-Informationen, die von der Teilnehmereinrichtung vom ersten Netzwerkknoten empfangen wurden; und/oder
- Speichern von zusätzlichen Bedingte-Übergabe-Informationen, die mit mindestens einem zusätzlichen Netzwerkknoten assoziiert sind, für den keine Bedingte-Übergabe-Informationen in Bedingte-Übergabe-Informationen beinhaltet waren, die von der Teilnehmereinrichtung vom ersten Netzwerkknoten empfangen wurden, insbesondere wobei der mindestens eine zusätzliche Netzwerkknoten den zweiten Netzwerkknoten umfasst oder demselben entspricht.

23. Zweiter Netzwerkknoten nach einem der Ansprüche 13 bis 22, wobei die Anweisungen, wenn sie von dem mindestens einen Prozessor ausgeführt werden, den zweiten Netzwerkknoten ferner veranlassen, einen oder mehrere der Schritte von Anspruch 13 bis 22 durchzuführen
- auf Basis des Empfangens der Anforderung zum Durchführen einer Wiederaufbauprozedur;
- als Teil oder während einer Wiederaufbauprozedur, die auf Basis der empfangenen Anforderung durchgeführt wird;
- bevor eine Wiederaufbaunachricht, die auf Basis des Empfangens der Anforderung übertragen wird, empfangen wird; und/oder
- bevor eine Wiederaufbauprozedur, die auf Basis des Empfangens der Anforderung durchgeführt wird, abgeschlossen ist.

24. Verfahren, das von einer Teilnehmereinrichtung durchgeführt wird, wobei das Verfahren Folgendes umfasst:
- Empfangen von Bedingte-Übergabe-Informationen von einem ersten Netzwerkknoten; und
- Halten von mindestens einem Teil der Bedingte-Übergabe-Informationen während einer Wiederaufbauprozedur nach einem Fehler, der eine Funkverbindung der Teilnehmereinrichtung beeinträchtigt;
wobei das Verfahren durch Folgendes gekennzeichnet ist:
- Empfangen von erneuerten Bedingte-Übergabe-Informationen während der Wiederaufbauprozedur von einem zweiten Netzwerkknoten.

25. Verfahren das von einem ersten Netzwerkknoten durchgeführt wird, wobei das Verfahren Folgendes umfasst:
- Übertragen von Bedingte-Übergabe-Informationen zu einer Teilnehmereinrichtung;
wobei das Verfahren durch Folgendes gekennzeichnet ist:
- Anzeigen für die Teilnehmereinrichtung, mindestens einen Teil der Bedingte-Übergabe-Informationen während einer Wiederaufbauprozedur nach einem Fehler, der eine Funkverbindung der Teilnehmereinrichtung beeinträchtigt, zu halten.

26. Verfahren das von einem zweiten Netzwerkknoten durchgeführt wird, wobei das Verfahren Folgendes umfasst:
- Empfangen einer Anforderung zum Durchführen einer Wiederaufbauprozedur von einer Teilnehmereinrichtung, wobei die Anforderung eine Anzeige zum Identifizieren eines ersten Netzwerkknotens beinhaltet, der mit der Teilnehmereinrichtung assoziiert ist;
- Anfordern von Kontextinformationen für die Teilnehmereinrichtung vom ersten Netzwerkknoten;
wobei das Verfahren durch Folgendes gekennzeichnet ist:
- Empfangen von Kontextinformationen für die Teilnehmereinrichtung vom ersten Netzwerkknoten, wobei die Kontextinformationen Bedingte-Übergabe-Informationen beinhalten, die mit der Teilnehmereinrichtung assoziiert sind; und
- Anzeigen für den ersten Netzwerkknoten, mindestens einen Teil der Bedingte-Übergabe-Informationen und/oder mindestens einen Teil von Ressourcen für eine bedingte Übergabe, die für die Teilnehmereinrichtung reserviert wurden, zu halten.

27. Computerprogramm, das Anweisungen umfasst, die, wenn sie von einer Teilnehmereinrichtung ausgeführt werden, die Teilnehmereinrichtung veranlassen, das Verfahren nach Anspruch 24 durchzuführen; oder Computerprogramm, das Anweisungen umfasst, die, wenn sie von einem ersten Netzwerkknoten ausgeführt werden, den ersten Netzwerkknoten veranlassen, das Verfahren nach Anspruch 25 durchzuführen; oder Computerprogramm, das Anweisungen umfasst, die, wenn sie von einem zweiten Netzwerkknoten ausgeführt werden, den zweiten Netzwerkknoten veranlassen, das Verfahren nach Anspruch 26 durchzuführen.

28. Computerlesbares Speichermedium, auf dem das Computerprogramm nach Anspruch 27 gespeichert ist.

## Revendications

1. Équipement utilisateur (100) comprenant :
au moins un processeur ; et
au moins une mémoire stockant des instructions qui, lorsqu'elles sont exécutées par l'au moins un processeur, amènent l'équipement utilisateur à au moins effectuer ce qui suit :
- recevoir (508) des informations de transfert intercellulaire conditionnel en provenance d'un premier nœud de réseau (110) ; et
- conserver (512) au moins une partie des informations de transfert intercellulaire conditionnel pendant une procédure de rétablissement suite à une défaillance (510) affectant une liaison radio de l'équipement utilisateur ;
- recevoir (528) d'un deuxième nœud de réseau (120) des informations de transfert intercellulaire conditionnel renouvelées pendant la procédure de rétablissement.

2. Équipement utilisateur selon la revendication 1, dans lequel les instructions, lorsqu'elles sont exécutées par l'au moins un processeur, amènent en outre l'équipement utilisateur à effectuer ce qui suit :
- recevoir du premier nœud de réseau une indication de conserver au moins une partie des informations de transfert intercellulaire conditionnel pendant une procédure de rétablissement suivant une défaillance affectant une liaison radio de l'équipement utilisateur, en particulier dans lequel l'indication est reçue en même temps que les informations de transfert intercellulaire conditionnel.

3. Équipement utilisateur selon l'une des revendications 1 ou 2, dans lequel les instructions, lorsqu'elles sont exécutées par l'au moins un processeur, amènent en outre l'équipement utilisateur à effectuer ce qui suit :
- détecter une défaillance affectant une liaison radio de l'équipement utilisateur ; et
- sur la base de la détection de la défaillance, conserver l'au moins une partie des informations de transfert intercellulaire conditionnel.

4. Équipement utilisateur selon l'une des revendications 1 à 3, dans lequel les instructions, lorsqu'elles sont exécutées par l'au moins un processeur, amènent en outre l'équipement utilisateur à effectuer ce qui suit :
- déterminer que pour un nœud de réseau qui a été sélectionné par l'équipement utilisateur pour la procédure de rétablissement, aucune information de transfert intercellulaire conditionnel n'a été incluse dans les informations de transfert intercellulaire conditionnel qui ont été reçues par l'équipement utilisateur en provenance du premier nœud de réseau ; et
- sur la base de la détermination, conserver l'au moins une partie des informations de transfert intercellulaire conditionnel.

5. Équipement utilisateur selon la revendication 4, dans lequel les informations de transfert intercellulaire conditionnel renouvelées comprennent :
- des informations de transfert intercellulaire conditionnel mises à jour pour mettre à jour au moins une partie des informations de transfert intercellulaire conditionnel qui ont été reçues par l'équipement utilisateur en provenance du premier nœud de réseau ;
- des informations de transfert intercellulaire conditionnel supplémentaires, dans lequel les informations de transfert intercellulaire conditionnel supplémentaires sont associées à au moins un nœud de réseau supplémentaire pour lequel aucune information de transfert intercellulaire conditionnel n'a été incluse dans les informations de transfert intercellulaire conditionnel qui ont été reçues par l'équipement utilisateur en provenance du premier nœud de réseau, en particulier dans lequel l'au moins un nœud de réseau supplémentaire comprend ou correspond au deuxième nœud de réseau ; et/ou
- des informations de libération de transfert intercellulaire conditionnel indiquant qu'il faut libérer au moins une partie des informations de transfert intercellulaire conditionnel qui ont été reçues par l'équipement utilisateur en provenance du premier nœud de réseau.

6. Équipement utilisateur selon l'une des revendications 4 ou 5, dans lequel les instructions, lorsqu'elles sont exécutées par l'au moins un processeur, amènent en outre l'équipement utilisateur à effectuer ce qui suit, sur la base des informations de transfert intercellulaire conditionnel renouvelées, en particulier pendant la procédure de rétablissement :
- mettre à jour au moins une partie des informations de transfert intercellulaire conditionnel qui ont été reçues par l'équipement utilisateur en provenance du premier nœud de réseau ;
- libérer au moins une partie des informations de transfert intercellulaire conditionnel qui ont été reçues par l'équipement utilisateur en provenance du premier nœud de réseau ; et/ou
- stocker des informations de transfert intercellulaire conditionnel supplémentaires associées à au moins un nœud de réseau supplémentaire pour lequel aucune information de transfert intercellulaire conditionnel n'a été incluse dans les informations de transfert intercellulaire conditionnel qui ont été reçues par l'équipement utilisateur en provenance du premier nœud de réseau, en particulier dans lequel l'au moins un nœud de réseau supplémentaire comprend ou correspond au deuxième nœud de réseau.

7. Premier nœud de réseau (110) comprenant :
au moins un processeur ; et
au moins une mémoire stockant des instructions qui, lorsqu'elles sont exécutées par l'au moins un processeur, amènent le premier nœud de réseau à au moins effectuer ce qui suit :
- transmettre (508) des informations de transfert intercellulaire conditionnel à un équipement utilisateur (100) ; et
- indiquer (508) à l'équipement utilisateur de conserver au moins une partie des informations de transfert intercellulaire conditionnel pendant une procédure de rétablissement suite à une défaillance (510) affectant une liaison radio de l'équipement utilisateur.

8. Premier nœud de réseau selon la revendication 7, dans lequel l'indication de conserver au moins une partie des informations de transfert intercellulaire conditionnel est transmise soit conjointement avec les informations de transfert intercellulaire conditionnel, soit séparément des informations de transfert intercellulaire conditionnel.

9. Premier nœud de réseau selon l'une des revendications 7 ou 8, dans lequel les instructions, lorsqu'elles sont exécutées par l'au moins un processeur, amènent en outre le premier nœud de réseau à effectuer ce qui suit :
- indiquer à l'équipement utilisateur de conserver l'au moins une partie des informations de transfert intercellulaire conditionnel, si un nœud de réseau, pour lequel aucune information de transfert intercellulaire conditionnel n'a été incluse dans les informations de transfert intercellulaire conditionnel qui ont été transmises par le premier nœud de réseau à l'équipement utilisateur, est sélectionné par l'équipement utilisateur pour la procédure de rétablissement.

10. Premier nœud de réseau selon l'une des revendications 7 à 9, dans lequel les instructions, lorsqu'elles sont exécutées par l'au moins un processeur, amènent en outre le premier nœud de réseau à effectuer ce qui suit :
- conserver au moins une partie des informations de transfert intercellulaire conditionnel associées à l'équipement utilisateur et qui ont été stockées par le premier nœud de réseau ; et/ou
- conserver au moins une partie des ressources de transfert intercellulaire conditionnel qui ont été réservées par le premier nœud de réseau pour l'équipement utilisateur.

11. Premier nœud de réseau selon la revendication 10, dans lequel les instructions, lorsqu'elles sont exécutées par l'au moins un processeur, amènent en outre le premier nœud de réseau à effectuer ce qui suit :
- recevoir d'un deuxième nœud de réseau, en particulier pendant la procédure de rétablissement, une indication d'effectuer au moins l'une des étapes de la revendication 10, en particulier dans lequel les instructions, lorsqu'elles sont exécutées par l'au moins un processeur, amènent le premier nœud de réseau à effectuer une ou plusieurs des étapes de la revendication 10 sur la base de la réception d'une ou plusieurs indications correspondantes en provenance du deuxième nœud de réseau.

12. Premier nœud de réseau selon l'une des revendications 7 à 11, dans lequel les instructions, lorsqu'elles sont exécutées par l'au moins un processeur, amènent en outre le premier nœud de réseau à transmettre à un deuxième nœud de réseau, en particulier pendant la procédure de rétablissement :
- des informations de transfert intercellulaire conditionnel mises à jour pour mettre à jour au moins une partie des informations de transfert intercellulaire conditionnel qui ont été transmises par le premier nœud de réseau à l'équipement utilisateur, et/ou pour mettre à jour au moins une partie des informations de transfert intercellulaire conditionnel associées à l'équipement utilisateur et qui ont été stockées par le deuxième nœud de réseau, en particulier dans lequel les informations de transfert intercellulaire conditionnel mises à jour sont associées au premier nœud de réseau ; et/ou
- des informations de transfert intercellulaire conditionnel supplémentaires associées à au moins un nœud de réseau supplémentaire pour lequel aucune information de transfert intercellulaire conditionnel n'a été incluse dans les informations de transfert intercellulaire conditionnel qui ont été transmises par le premier nœud de réseau à l'équipement utilisateur, en particulier dans lequel les informations de transfert intercellulaire conditionnel supplémentaires sont associées au premier nœud de réseau et au deuxième nœud de réseau.

13. Deuxième nœud de réseau (120) comprenant :
au moins un processeur ; et
au moins une mémoire stockant des instructions qui, lorsqu'elles sont exécutées par l'au moins un processeur, amènent le deuxième nœud de réseau à au moins effectuer ce qui suit :
- recevoir (513) d'un équipement utilisateur (100) une demande d'effectuer une procédure de rétablissement, dans lequel la demande comporte une indication pour identifier un premier nœud de réseau (110) qui est associé à l'équipement utilisateur ;
- demander (514) au premier nœud de réseau des informations de contexte pour l'équipement utilisateur ;
- recevoir (515) du premier nœud de réseau des informations de contexte pour l'équipement utilisateur, dans lequel les informations de contexte comportent des informations de transfert intercellulaire conditionnel associées à l'équipement utilisateur ; et
- indiquer (522) au premier nœud de réseau de conserver au moins une partie des informations de transfert intercellulaire conditionnel et/ou au moins une partie des ressources de transfert intercellulaire conditionnel qui ont été réservées pour l'équipement utilisateur.

14. Deuxième nœud de réseau selon la revendication 13, dans lequel les informations de transfert intercellulaire conditionnel reçues par le deuxième nœud de réseau en tant que partie des informations de contexte ne comportent pas d'informations de transfert intercellulaire conditionnel pour le deuxième nœud de réseau.

15. Deuxième nœud de réseau selon l'une des revendications 13 ou 14, dans lequel les instructions, lorsqu'elles sont exécutées par l'au moins un processeur, amènent en outre le deuxième nœud de réseau à effectuer ce qui suit :
- sélectionner les parties respectives des informations de transfert intercellulaire conditionnel et/ou des ressources de transfert intercellulaire conditionnel qui ont été réservées pour l'équipement utilisateur qui doivent être conservées ou libérées.

16. Deuxième nœud de réseau selon la revendication 15, dans lequel les instructions, lorsqu'elles sont exécutées par l'au moins un processeur, amènent en outre le deuxième nœud de réseau à effectuer ce qui suit :
- indiquer au premier nœud de réseau les parties des informations de transfert intercellulaire conditionnel et/ou des ressources de transfert intercellulaire conditionnel qui ont été sélectionnées pour être libérées.

17. Deuxième nœud de réseau selon l'une des revendications 15 ou 16, dans lequel les instructions, lorsqu'elles sont exécutées par l'au moins un processeur, amènent en outre le deuxième nœud de réseau à effectuer ce qui suit :
- indiquer à au moins un nœud de réseau supplémentaire associé aux parties des informations de transfert intercellulaire conditionnel et/ou des ressources de transfert intercellulaire conditionnel qui ont été sélectionnées pour être libérées, de libérer des informations de transfert intercellulaire conditionnel associées à l'équipement utilisateur et qui ont été stockées par l'au moins un nœud de réseau supplémentaire et/ou de libérer des ressources de transfert intercellulaire conditionnel qui ont été réservées par l'au moins un nœud de réseau supplémentaire pour l'équipement utilisateur.

18. Deuxième nœud de réseau selon l'une des revendications 13 à 17, dans lequel les instructions, lorsqu'elles sont exécutées par l'au moins un processeur, amènent en outre le deuxième nœud de réseau à recevoir du premier nœud de réseau :
- des informations de transfert intercellulaire conditionnel mises à jour pour mettre à jour au moins une partie des informations de transfert intercellulaire conditionnel qui ont été transmises par le premier nœud de réseau à l'équipement utilisateur et/ou pour mettre à jour au moins une partie des informations de transfert intercellulaire conditionnel qui ont été reçues par le deuxième nœud de réseau entant que partie des informations de contexte, en particulier dans lequel les informations de transfert intercellulaire conditionnel mises à jour sont associées au premier nœud de réseau ; et/ou
- des informations de transfert intercellulaire conditionnel supplémentaires associées à au moins un nœud de réseau supplémentaire pour lequel aucune information de transfert intercellulaire conditionnel n'a été incluse dans les informations de transfert intercellulaire conditionnel qui ont été transmises par le premier nœud de réseau à l'équipement utilisateur, en particulier dans lequel les informations de transfert intercellulaire conditionnel supplémentaires sont associées au premier nœud de réseau et au deuxième nœud de réseau.

19. Deuxième nœud de réseau selon l'une des revendications 13 à 18, dans lequel les instructions, lorsqu'elles sont exécutées par l'au moins un processeur, amènent en outre le deuxième nœud de réseau à indiquer à au moins un nœud de réseau supplémentaire associé à l'équipement utilisateur et/ou au premier nœud de réseau :
- que l'équipement utilisateur est maintenant desservi par le deuxième nœud de réseau ;
- de conserver au moins une partie des informations de transfert intercellulaire conditionnel associées à l'équipement utilisateur et qui ont été stockées par l'au moins un nœud de réseau supplémentaire ; et/ou
- de conserver au moins une partie des ressources de transfert intercellulaire conditionnel qui ont été réservées par l'au moins un nœud de réseau supplémentaire pour l'équipement utilisateur.

20. Deuxième nœud de réseau selon l'une des revendications 13 à 19, dans lequel les instructions, lorsqu'elles sont exécutées par l'au moins un processeur, amènent en outre le deuxième nœud de réseau à effectuer ce qui suit :
- demander à au moins un nœud de réseau supplémentaire associé à l'équipement utilisateur et/ou au premier nœud de réseau, des informations de transfert intercellulaire conditionnel supplémentaires, en particulier dans lequel les informations de transfert intercellulaire conditionnel supplémentaires sont associées au deuxième nœud de réseau et à l'au moins un nœud de réseau supplémentaire.

21. Deuxième nœud de réseau selon l'une des revendications 13 à 20, dans lequel les instructions, lorsqu'elles sont exécutées par l'au moins un processeur, amènent en outre le deuxième nœud de réseau à effectuer ce qui suit :
- transmettre à l'équipement utilisateur des informations de transfert intercellulaire conditionnel renouvelées.

22. Deuxième nœud de réseau selon la revendication 21, dans lequel les instructions, lorsqu'elles sont exécutées par l'au moins un processeur, amènent en outre le deuxième nœud de réseau à indiquer à l'équipement utilisateur d'effectuer ce qui suit, sur la base des informations de transfert intercellulaire conditionnel renouvelées :
- mettre à jour au moins une partie des informations de transfert intercellulaire conditionnel qui ont été reçues par l'équipement utilisateur en provenance du premier nœud de réseau ;
- libérer au moins une partie des informations de transfert intercellulaire conditionnel qui ont été reçues par l'équipement utilisateur en provenance du premier nœud de réseau ; et/ou
- stocker des informations de transfert intercellulaire conditionnel supplémentaires associées à au moins un nœud de réseau supplémentaire pour lequel aucune information de transfert intercellulaire conditionnel n'a été incluse dans les informations de transfert intercellulaire conditionnel qui ont été reçues par l'équipement utilisateur en provenance du premier nœud de réseau, en particulier dans lequel l'au moins un nœud de réseau supplémentaire comprend ou correspond au deuxième nœud de réseau.

23. Deuxième nœud de réseau selon l'une des revendications 13 à 22, dans lequel les instructions, lorsqu'elles sont exécutées par l'au moins un processeur, amènent en outre le deuxième nœud de réseau à effectuer une ou plusieurs des étapes de la revendications 13 à 22
- sur la base de la réception de la demande d'effectuer une procédure de rétablissement ;
- dans le cadre d'une procédure de rétablissement effectuée sur la base de la réception de la demande, ou au cours de celle-ci ;
- avant qu'un message de rétablissement transmis sur la base de la réception de la demande ne soit reçu ; et/ou
- avant qu'une procédure de rétablissement effectuée sur la base de la réception de la demande ne soit terminée.

24. Procédé, effectué par un équipement utilisateur, le procédé comprenant les étapes suivantes :
- recevoir des informations de transfert intercellulaire conditionnel en provenance d'un premier nœud de réseau ; et
- conserver au moins une partie des informations de transfert intercellulaire conditionnel pendant une procédure de rétablissement suite à une défaillance affectant une liaison radio de l'équipement utilisateur ; ledit procédé étant **caractérisé par** l'étape suivante :
- recevoir d'un deuxième nœud de réseau des informations de transfert intercellulaire conditionnel renouvelées pendant la procédure de rétablissement.

25. Procédé, effectué par un premier nœud de réseau, le procédé comprenant l'étape suivante :
- transmettre des informations de transfert intercellulaire conditionnel à un équipement utilisateur ; ledit procédé étant **caractérisé par** l'étape suivante :
- indiquer à l'équipement utilisateur de conserver au moins une partie des informations de transfert intercellulaire conditionnel pendant une procédure de rétablissement suite à une défaillance affectant une liaison radio de l'équipement utilisateur.

26. Procédé, effectué par un deuxième nœud de réseau, le procédé comprenant les étapes suivantes :
- recevoir d'un équipement utilisateur une demande d'effectuer une procédure de rétablissement, dans lequel la demande comporte une indication pour identifier un premier nœud de réseau qui est associé à l'équipement utilisateur ;
- demander au premier nœud de réseau des informations de contexte pour l'équipement utilisateur ; ledit procédé étant **caractérisé par** les étapes suivantes :
- recevoir du premier nœud de réseau des informations de contexte pour l'équipement utilisateur, dans lequel les informations de contexte comportent des informations de transfert intercellulaire conditionnel associées à l'équipement utilisateur ; et
- indiquer au premier nœud de réseau de conserver au moins une partie des informations de transfert intercellulaire conditionnel et/ou au moins une partie des ressources de transfert intercellulaire conditionnel qui ont été réservées pour l'équipement utilisateur.

27. Programme informatique comprenant des instructions, qui, lorsqu'elles sont exécutées par un équipement utilisateur, amènent l'équipement utilisateur à effectuer le procédé selon la revendication 24 ; ou un programme informatique comprenant des instructions qui, lorsqu'elles sont exécutées par un premier nœud de réseau, amènent ledit premier nœud de réseau à effectuer le procédé selon la revendication 25 ; ou un programme informatique comprenant des instructions qui, lorsqu'elles sont exécutées par un deuxième nœud de réseau, amènent ledit deuxième nœud de réseau à effectuer le procédé selon la revendication 26.

28. Support de stockage lisible par ordinateur sur lequel est stocké le programme informatique selon la revendication 27.
